(19) Europäisches Patentamt
European Patent Office
Office européen des brevets

(11) EP 4 486 484 B1

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **23709194.7**

(22) Anmeldetag: **03.03.2023**

(51) Internationale Patentklassifikation (IPC):
***B01D 53/14*** *(2006.01)*

(52) Gemeinsame Patentklassifikation (CPC):
**B01D 53/1475; B01D 53/1425;** B01D 2252/10; B01D 2252/204; B01D 2252/602; B01D 2257/504; B01D 2258/06; Y02C 20/40; Y02P 20/151

(86) Internationale Anmeldenummer:
**PCT/EP2023/055467**

(87) Internationale Veröffentlichungsnummer:
**WO 2023/166188 (07.09.2023 Gazette 2023/36)**

(54) **VERFAHREN ZUR ABTRENNUNG VON KOHLENDIOXID AUS EINEM LUFTSTROM UND REGENERIERUNG DES ABSORPTIONSMITTELS IN EINER DREI-KAMMER-ELEKTROLYSEZELLE**

PROCESS FOR SEPARATING CARBON DIOXIDE FROM AN AIR FLOW AND REGENERATION OF THE ABSORPTION AGENT IN A THREE-CHAMBER ELECTROLYSIS CELL

PROCÉDÉ POUR EXTRAIRE DU DIOXYDE DE CARBONE D’UN FLUX D’AIR ET RÉGÉNÉRATION DE L’ABSORBANT DANS UNE CELLULE D’ÉLECTROLYSE À TROIS CHAMBRES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **03.03.2022 DE 102022105042**

(43) Veröffentlichungstag der Anmeldung:
**08.01.2025 Patentblatt 2025/02**

(60) Teilanmeldung:
**26166060.9**

(73) Patentinhaber: **Greenlyte Carbon Technologies GmbH**
**45143 Essen (DE)**

(72) Erfinder: **BEHR, Peter**
**45356 Essen (DE)**

(74) Vertreter: **Epping - Hermann - Fischer Patentanwaltsgesellschaft mbH**
**Schloßschmidstraße 5**
**80639 München (DE)**

(56) Entgegenhaltungen:
**WO-A1-2020/152330**
**WO-A1-2020/163513**
**WO-A1-2022/023387**
**US-A- 4 197 421**
**US-A1- 2007 045 125**
**US-A1- 2011 277 474**
**US-A1- 2017 209 826**
**US-A1- 2019 085 472**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 486 484 B1

## Beschreibung

Die vorliegende Erfindung betrifft ein Verfahren zur Isolierung von Kohlendioxid aus einem Luftstrom, wobei das Verfahren mindestens die Schritte umfasst:

a) Bereitstellen einer wässrigen Lösung eines Kohlendioxid-Absorptionsmittels, wobei das Kohlendioxid-Absorptionsmittel Kationen aus der 1. Hauptgruppe des Periodensystems umfasst;
b) Durchleiten eines Kohlendioxid enthaltenden Luftstroms durch die in Verfahrensschritt a) bereitgestellte Lösung, wobei zumindest ein Teil des Kohlendioxids aus dem Luftstrom am Kohlendioxid-Absorptionsmittel gebunden und der Luftstrom an Kohlendioxid abgereichert wird;
c) Einleiten der wässrigen Lösung aus Verfahrensschritt b) oder einer wässrigen Lösung umfassend das am Kohlendioxid-Absorptionsmittel gebundene Kohlendioxid in eine mittlere Kammer einer mindestens Drei-Kammer-Elektrolysezelle aus Anodenkammer, Kathodenkammer und mindestens einer zwischen der Anodenkammer und der Kathodenkammer angeordneten, mittleren Kammer, wobei die Drei-Kammer-Elektrolysezelle eine für einwertige Kationen selektive Membran aufweist und Elektrolysieren der wässrigen Lösung unter Freisetzung zumindest eines Teils des Kohlendioxids.

Die Druckschrift US 2019/085472 A1 beschreibt ein Verfahren zur kontrollierten Entfernung von Bicarbonat aus alkalischem Wasser und dessen Ersatz durch eine starke Base, die in der Lage ist, $CO_2$ aus der Atmosphäre als Karbonat- und Bicarbonatlösung chemisch zu absorbieren.
Die Druckschrift US 4 197 421 A befasst sich mit synthetischen kohlenstoffhaltigen Brennstoffen und Ausgangsstoffen.
Die Druckschrift US 2007/045125 A1 beschreibt eine elektrochemische Zelle zur Herstellung von Synthesegas unter Verwendung von atmosphärischer Luft und Wasser.
Die Druckschrift WO 2022/023387 A1 beschreibt ein Verfahren zur Bindung, zum Transport, zur Reaktionsaktivierung, zur Umwandlung, zur Speicherung und zur Freisetzung von wasserlöslichen Gasen.
Die Druckschrift US 2011/277474 A1 beschreibt Verfahren und Systeme zur Nutzung von Erdgaskraftwerken.
Die Druckschrift WO 2020/163513 A1 beschreibt ein System und ein Verfahren zur Herstellung von synthetischem Brennstoff durch $CO_2$-Abscheidung und Wasserspaltung.
Die Druckschrift US 2017/209826 A1 beschreibt eine Anordnung und ein Verfahren zur Rückgewinnung von Kohlendioxid aus Gas unter Verwendung eines Absorptionstankgehäuses und eines Rührwerks.
Die Druckschrift EP 2 163 294 B1 beschreibt ein System und ein Verfahren zur Wiederherstellung von $CO_2$ durch die Aufnahme von wässrigem Carbonatrauchgas und eine hochwirksame bipolare Membranelektrodialyse.
Die Druckschrift Iizuka et al., Carbon dioxide recovery from carbonate solutions using bipolar membrane electrodialysis, Separation and Purification Technology, 2012, 101, 49-59 beschreibt eine Kohlendioxidrückgewinnung aus Carbonatlösungen mittels bipolarer Membranelektrodialyse.
Die Druckschrift EP 2 737 937 A1 beschreibt eine elektrolytische Reduktion von Kohlenstoffabscheidungslösungen.
Eine der größten Herausforderungen des 21. Jahrhundert wird darin bestehen, die Gaszusammensetzung der Atmosphäre in Bereiche zurückzuführen, welche eine zu starke klimatische Erwärmung der Erde verhindern. Wissenschaftlich erwiesen ist dabei, dass insbesondere die Erwärmung in den letzten Jahrzehnten auf eine Erhöhung der so genannten Treibhausgase zurückzuführen ist. Bei den Treibhausgasen nimmt insbesondere das Kohlendioxid eine Schlüsselstellung ein, wobei der starke Anstieg der Kohlendioxidkonzentration auf eine verstärkte Verbrennung fossiler Brennstoffe zurückzuführen ist. Insofern wird es für die nahe Zukunft wichtig, neben der Reduktion neuer Kohlendioxid-Emissionen gleichzeitig auch technische Lösungen für die Aufnahme und Speicherung von Kohlendioxid aus der Umgebung bereitzustellen. Nur durch die weitgehende Vermeidung neuer und den effizienten Umgang mit bereits bestehenden Treibhausgasen, kann die ungewollte Erderwärmung in halbwegs tolerablen Grenzen gehalten werden.
Eine technische Möglichkeit zur Entfernung von Kohlendioxid aus der Luft besteht darin, dass das Kohlendioxid über oder durch ein Adsorbens geleitet und von diesem selektiv aus dem Luftstrom entfernt wird. Die Kohlendioxid-Konzentration in der Luft wird dadurch verringert, wohingegen die Kohlendioxidkonzentration im Laufe des Verfahrens im Absorbens ansteigt. Dieser Vorgang ist für eine Vielzahl unterschiedlicher Absorbenzien bekannt, wobei die Systeme hinreichend komplex sind, da sowohl die Konzentration an Kohlendioxid und die Umgebungsbedingungen bei der Absorption so variabel sein können, dass mit unterschiedlichen Absorbenzien unterschiedliche Effizienzen in der Absorption erreicht werden. Des Weiteren spielen natürlich Umweltaspekte eine große Rolle, da effiziente Zusammensetzungen nicht immer besonders umweltfreundlich sind. Ein weiterer Aspekt ergibt sich dadurch, dass das Aufnahmemedium kostengünstig und im Zuge der Weiterverarbeitung des aufgenommenen Kohlendioxids nicht hinderlich sein darf. Letzteres ist insbesondere wichtig, da eine energie- und kostensparende Isolierung des einmal aufgenommenen Kohlendioxids, bestenfalls unter einer uneingeschränkten Weiterverwendbarkeit des Absorptionsmittels, im hohen Maße

zur Energiebilanz und damit der Attraktivität des gesamten Verfahrens beiträgt. Somit hängt die Wirtschaftlichkeit und die Umweltfreundlichkeit des Verfahrens nicht nur von der Aufnahme, sondern auch von den weiteren Verfahrensschritten ab, welche letztendlich zu einer Bereitstellung möglichst reiner Kohlendioxidströme beitragen sollen. Diese Ströme können dann in unterschiedlich weiteren Schritten in begehrte Wertstoffe, wie beispielsweise Kohlenwasserstoffe oder Alkohole, umgesetzt werden, welches einen zusätzlichen Beitrag zur Umweltbilanz liefern kann.

Aus diesen Überlegungen haben eine Vielzahl zur Aufnahme von Kohlendioxid geeigneter Kohlendioxid-Absorbenzien und prinzipielle Möglichkeiten zur Weiterverarbeitung dieser ihren Eingang in die Patentliteratur gefunden.

So offenbart beispielsweise die WO 2008 072 979 A1 ein Verfahren zum Erfassen von $CO_2$ aus Abgas in einem Absorber, wobei das $CO_2$-haltige Gas durch einen wässerigen absorbierenden Schlamm geleitet wird, dadurch gekennzeichnet, dass der wässerige absorbierende Schlamm ein anorganisches alkalisches Carbonat, Bicarbonat und mindestens eines aus Absorptionsbeschleuniger und Katalysator beinhaltet, und das $CO_2$ durch Ausfällung in dem Absorber in Feststoffe umgewandelt wird, wobei der Schlamm mit den ausgefällten Feststoffen zu einer Abscheidevorrichtung gefördert wird, in welcher die Feststoffe abgeschieden werden, und im Wesentlichen alles des mindestens einen aus Absorptionsbeschleuniger und Katalysator zusammen mit der verbleibenden wässerigen Phase in den Absorber zurückgeführt wird.

In einem weiteren Patentdokument, der WO 2020 152 330 A1, wird ein Verfahren zum Abtrennen und Gewinnen von Kohlendioxid aus der Umgebungsluft offenbar. Das Verfahren umfasst die kontinuierliche Durchführung der folgenden Schritte: a) In-Kontakt-Bringen von Umgebungsluft mit einer wässrigen Lösung zumindest eines Alkali- oder Erdalkalimetallkations zur Absorption des Kohlendioxids in die Lösung unter Bildung des Hydrogencarbonats bzw. Carbonats des zumindest einen Metalls; b) Elektrodialyse der dabei erhaltenen Lösung unter Verwendung einer Kombination aus bipolaren Ionentauschermembranen und für ein- oder mehrwertige Anionen selektiven Ionentauschermembranen zum Erhalt einer an (Hydrogen-)Carbonationen angereicherten und einer daran abgereicherten Lösung, wobei die an (Hydrogen-)Carbonationen abgereicherte Lösung zu Schritt a) rezykliert wird; c) thermische Desorption des Kohlendioxids aus der in Schritt b) erhaltenen, an (Hydrogen-)Carbonationen angereicherten Lösung mittels Dampfstrippen zum Erhalt eines Kohlendioxid-Wasserdampf-Gemischs und einer an $CO_2$ abgereicherten Lösung, die zu Schritt b) rezykliert wird, wobei darin ein pH zwischen 7 und 8,5 oder zwischen 8 und 9,5 eingestellt wird; und d) Abtrennung von Wasser aus dem erhaltenen Kohlendioxid-Wasserdampf- Gemisch mittels Kühlung zur Kondensation des Wasserdampfs und gegebenenfalls weitere Trocknung des Kohlendioxids.

In der EP 3 384 973 A1 wird ein Verfahren zur Rückgewinnung von Kohlendioxid zur Anreicherung der Gasströme, die zur Herstellung von Natriumcarbonat und Natriumhydrogencarbonat nach dem Ammoniak-Soda-Verfahren verwendet werden beschrieben. Das Verfahren umfasst: Inkontaktbringen der in dem Verfahren zur Herstellung von Natriumcarbonat und Natriumhydrogencarbonat nach dem Ammoniak-Soda-Verfahren auftretenden Ströme von Prozessgasen und/oder Auslassgasen in der $CO_2$-Absorptionskolonne, umfassend: - ein Teil- oder ganzer Gasstrom, der aus der Kalkverbrennung in Schachtkalköfen mit Luftstoß stammt, und/oder - ein Teil oder ein ganzer Auslassgasstrom aus der Anlage zur Kohlensäure von Soda und/oder

- ein Teil oder ein ganzer Auslassgasstrom aus der Anlage zur Carbonisierung von Backpulver,
- und gegebenenfalls einen oder mehrere Ströme von Rauchgasen oder anderen kohlendioxidhaltigen Gasen, die aus der Verbrennung fester, flüssiger oder gasförmiger Brennstoffe resultieren, um Wärme oder elektrische Energie zu erzeugen, um die Produktionsanforderungen durch das Ammoniak-Soda-Verfahren zu erfüllen;
- und gegebenenfalls einen oder mehrere Rauchgasströme oder andere kohlendioxidhaltige Gase, die von einem externen Lieferanten stammen mit einem Strom einer wässrigen absorbierenden Lösung, um eine mit Kohlendioxid angereicherte wässrige absorbierende Lösung zu bilden, Erhitzen einer mit Kohlendioxid angereicherten wässrigen Absorptionslösung im Verdampfer, Desorption von gasförmigem Kohlendioxid unter Regeneration einer wässrigen absorbierenden Lösung in einer Desorptionssäule, Abkühlen der regenerierten wässrigen Absorptionslösung und Zurückführen in die $CO_2$-Absorptionssäule und Entfernen von der Desorptionssäule und Abkühlen des Stroms mit einem hohen Kohlendioxidgehalt zur Verwendung in dem Verfahren zur Herstellung von Natriumcarbonat und Natriumhydrogencarbonat durch das Ammoniak-Soda-Verfahren.

Derartige aus dem Stand der Technik bekannte Lösungen können noch weiteres Verbesserungspotential bieten, insbesondere hinsichtlich der Effizienz der Kohlendioxidaufnahme unter variablen Umgebungsbedingungen und insbesondere hinsichtlich der Möglichkeit mit einem geringen Energieaufwand einmal gebundenes Kohlendioxid einfach und schnell wieder aus der Aufnahmeflüssigkeit zu desorbieren.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung ein Verfahren bereitzustellen, welches in der Lage ist einmal in einer Absorptionsflüssigkeit gebundenes Kohlendioxid möglichst energieeffizient und schnell in möglichst reiner Form isoliert zu desorbieren.

Die Lösung der Aufgabe erfolgt durch die Merkmale des unabhängigen Anspruchs, gerichtet auf das erfindungsgemäße Verfahren zur Aufnahme und Abgabe von Kohlendioxid. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Erfindungsgemäß ist dementsprechend ein Verfahren zur Isolierung von Kohlendioxid aus einem Luftstrom, wobei das Verfahren mindestens die Schritte umfasst:

a) Bereitstellen einer wässrigen Lösung eines Kohlendioxid-Absorptionsmittels, wobei das Kohlendioxid-Absorptionsmittel Kationen aus der 1. Hauptgruppe des Periodensystems umfasst;
b) Durchleiten eines Kohlendioxid enthaltenden Luftstroms durch die in Verfahrensschritt a) bereitgestellte Lösung, wobei zumindest ein Teil des Kohlendioxids aus dem Luftstrom am Kohlendioxid-Absorptionsmittel gebunden und der Luftstrom an Kohlendioxid abgereichert wird;
c) Einleiten der wässrigen Lösung aus Verfahrensschritt b) oder einer wässrigen Lösung umfassend das am Kohlendioxid-Absorptionsmittel gebundene Kohlendioxid in eine mittlere Kammer einer mindestens Drei-Kammer-Elektrolysezelle aus Anodenkammer, Kathodenkammer und mindestens einer zwischen der Anodenkammer und der Kathodenkammer angeordneten, mittleren Kammer, wobei die Drei-Kammer-Elektrolysezelle eine eine für einwertige Kationen selektive Membran aufweist und Elektrolysieren der wässrigen Lösung unter Freisetzung zumindest eines Teils des Kohlendioxids.

Überraschenderweise wurde gefunden, dass über oben angegebenes Verfahren Kohlendioxid sehr effizient aus Luftströmen aufgenommen und sehr selektiv von dem Absorptionsmittel über eine Elektrolyse wieder befreit werden kann. Mittels dieses Gesamtverfahrens lassen sich sehr unterschiedliche Luftströme mit stark variierenden Gehalten an Kohlendioxid effektiv behandeln. So lässt sich beispielsweise Kohlendioxid aus der normalen Umgebungsluft mit einem relativ geringen Kohlendioxid-Anteil oder aber auch aus Abgasströmen mit einem sehr hohen Kohlendioxid-Anteil absorbierenden. Die mit Kohlendioxid beladenen Flüssigkeiten lassen sich über die Elektrolyse besonders energetisch effizient aufarbeiten, so dass ohne großen Energieeinsatz das Kohlendioxid aus der Flüssigkeit desorbiert werden kann. Ein weiterer Vorteil dieses Verfahren ist zudem, dass das Kohlendioxid in reiner Form anfallen kann. So ist es beispielsweise möglich, im Rahmen der Elektrolyse die Abgabe von Kohlendioxid aus der Flüssigkeit so zu steuern, dass dieses Gas im Wesentlichen rein anfällt. In diesen Fällen muss der Kohlendioxid-Gasstrom also nicht extra weiter von anderen Gasbestandteilen befreit werden. In diesen Fällen kann das Verfahren dazu genutzt werden, dass die beiden einzelnen Schritte der Kohlendioxid-Aufnahme und -Abgabe so aufeinander abgestimmt werden, dass die Flüssigkeit zur Aufnahme des Kohlendioxids im Kreis gefahren wird. Es kann sich insofern ein flexibel adaptierbarer Gesamtprozess ergeben, welcher kontinuierlich betrieben werden kann. Zudem ist das erfindungsgemäße Verfahren deutlich vorteilhafter als die aus dem Stand der Technik bekannten elektrolytischen Aufarbeitung kohlendioxidhaltiger wässriger KOH-Lösungen. In letzteren werden nur Wirkungsgrade von 70% bis 80% erzielt. Die Wirkungsgradverluste resultieren im Wesentlichen aus der Überspannung an der Anode. Wird der wässrige Elektrolyt bestehend aus einer KOH-Lauge durch eine wässrige $KHCO_3^-$-Mischung, die bei der $CO_2$-Absorption aus der Luft entsteht, ersetzt und sind die Anoden und Kathodenkammer durch eine kationenselektive Membran getrennt, so wird neben $O_2$ auch $CO_2$ an der Anode freigesetzt. Soll das abgetrennte $CO_2$ in einem nachgeschalteten Prozess als Synthesebaustein eingesetzt werden, so eignet sich dieses Verfahren nur bedingt, da der Sauerstoff verfahrenstechnisch sehr aufwendig und unter Energieaufwand aus dem Kohlendioxid-Sauerstoff-Gasgemisch entfernt werden muss. Dieses Problem kann dadurch umgangen werden, indem die Elektrolyse in einem 3-Kammer-Aufbau durchgeführt wird. In diesem Verfahrensschritt lassen sich die unterschiedlichen Gase, Sauerstoff, Kohlendioxid und Wasserstoff, in getrennten Kammern auffangen und insofern ist eine Trennung der Komponenten nicht nötig.

Das erfindungsgemäße Verfahren ist ein Verfahren zur Isolierung von Kohlendioxid aus einem Luftstrom. Das Verfahren ist also in der Lage, Kohlendioxid selektiv aus einem Luftstrom zu entnehmen und anschließend, in einem weiteren Verfahrensschritt, im Wesentlichen in reiner Form wieder zur Verfügung zu stellen. Das Kohlendioxid wird also durch die Absorption und die Desorption von weiteren Gasbestandteilen getrennt. Als Luftströme eignen sich dazu unterschiedlich anfallende gasförmige Mischungen. So kann es sich bei dem Luftstrom beispielsweise um Umgebungsluft handeln. Es ist aber auch möglich, dass als Luftstrom der Abgasstrom eines Verbrennungsprozesses verwendet wird. Die unterschiedlichen Luftströme können sich insofern durch die weiteren Gasbestandteile in der Zusammensetzung unterscheiden. Zudem eignet sich das erfindungsgemäße Verfahren zur Behandlung von Luftströmen mit deutlich unterschiedlichen Kohlendioxid-Anteilen. Der Luftstrom kann beispielsweise Kohlendioxid in einer Konzentration von größer oder gleich 100 ppm, des Weiteren bevorzugt von größer oder gleich 500 ppm und weiter bevorzugten größer oder gleich 1000 ppm beinhalten.

Im Verfahrensschritt a) erfolgt das Bereitstellen einer wässrigen Lösung eines Kohlendioxid-Absorptionsmittels, wobei das Kohlendioxid-Absorptionsmittel Kationen aus der 1. Hauptgruppe des Periodensystems umfasst. Die Voraussetzung zur Absorption des Kohlendioxids aus dem Luftstrom ist das Vorhandensein eines entsprechenden Absorptionsmittels in einer wässrigen Lösung. Das erfindungsgemäße Verfahren kann dabei mit einer Vielzahl unterschiedlicher Absorptionsmittel durchgeführt werden. Wesentliche Voraussetzung ist allerdings, dass das Absorptionsmittel Kationen aus der 1. Hauptgruppe umfasst. Insofern kann das Absorptionsmittels beispielsweise Kalium- oder Natrium-Ionen als Bestandteile aufweisen. Dabei muss das Absorptionsmittel nicht zwangsläufig als Salz vorliegen. Es ist auch möglich, dass ein in Lösung ungeladenes Absorptionsmittel vorliegt, wobei zusätzlich zu dem eigentlichen Absorptionsmittel dann weitere Bestandteile in Form einer salzartigen Verbindung mit den entsprechenden Kationen aus der 1. Hauptgruppe hinzutreten. Der Anteil an Absorptionsmittel kann dabei entsprechend der vorliegenden Trennaufgabe und den Kohlendioxid-Konzentrationen im Luftstrom angepasst werden. So kann der Anteil an Absorptionsmittel bevorzugt größer oder gleich 2,5 Gew.-%, weiter bevorzugt größer oder gleich 7,5 Gew.-% und des Weiteren bevorzugt größer oder gleich 15 Gew.-% bezogen auf die wässrige Lösung betragen. Die Kationen aus der ersten Hauptgruppe stammen demnach aus der Gruppe der Alkali-Ionen wie beispielsweise Lithium, Natrium, Kalium oder Rubidium. Entsprechend des Anteils an Absorptionsmittel kann die wässrige Lösung bevorzugt größer oder gleich 75 Gew.-%, des Weiteren bevorzugt größer oder gleich 80 Gew.-% und weiterhin bevorzugt größer oder gleich 85 Gew.-% an Wasser aufweisen.

Grundsätzlich geeignet sind hierbei sämtliche $CO_2$-Absorbenzien, sofern diese eine ausreichende Löslichkeit in der wässrigen Lösung zeigen. In Kontakt der gelösten Substanz mit der Umgebungsluft zeigen beispielsweise anorganische Carbonate, Amine, Polyethylenglykolamine, Diaminopolyethylenglykole, Carbonsäurederivate der Polyethylenglykolamine, Polyethylenimine, aminhaltige Zuckerderivate, Aminosäuren oder Mischungen mindestens zweier dieser Komponenten die geeigneten Eigenschaften. Diese Gruppenauswahl zeigt vorteilhafterweise einen nahezu vernachlässigbaren Dampfdruck und kein gesundheits- oder umweltgefährdendes Potential. Als Amine eignen sich sowohl primäre, sekundäre oder tertiäre Amine aus einem Molekulargewichtsbereich von kleiner oder gleich 1000 g/mol. Als Polyethylenglykolamine, Diaminopolyethylenglykole und Carbonsäurederivate der Polyethylenglykolamine können Substanzen in Frage kommen, in denen eine (Polyethylenglykolamin) oder beide OH-Gruppen (Diaminopolyethylenglykol) des PEGs durch Amingruppen ersetzt wurden. Die Carbonsäurederivate sind entsprechend aufgebaut, wobei eine oder beide OH-Gruppen durch Carbonsäuregruppen (-COOH) ersetzt wurden. Als Zuckerderivate geeignet sind beispielsweise N-Methyl-D-glucamin (Meglumin) und N-Ethyl-D-glucamin (Eglumin). Beide zeigen eine sehr gute Löslichkeit und in Lösung einen zu vernachlässigenden Dampfdruck.

Als Absorptionsmittel eignen sich auch Polyethylenimine nach der folgenden Formel:

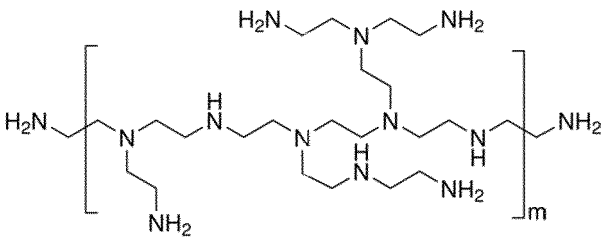

,

wobei über die Anzahl m die Eigenschaften bezüglich Viskosität, Dampfdruck und Kohlendioxidaufnahme feinjustiert werden können. Bevorzugt kann das Molekulargewicht der verzweigten Polyethylenimine kleiner oder gleich 800 g/mol betragen.

Zusätzlich zu dem Absorptionsmittel kann die wässrige Lösung noch weitere Bestandteile in Form von Polyolen aufweisen, welche insbesondere dazu genutzt werden können, um die Viskosität und den Wasserdampfdruck der Flüssigkeit zu regulieren. Als weitere Bestandteile kann das Kohlendioxid-Absorbens beispielsweise Polyethylenglykole oder Polyole mit einem Molekulargewicht von kleiner oder gleich 1000 g/mol in einem Anteil von größer oder gleich 2 Gew-% und kleiner oder gleich 93 Gew.-% aufweisen. In Kontakt mit der Umgebungsluft eignen sich dazu Polyethylenglykol (PEG) oder Polyole, die einen speziell festgelegten Dampfdruck aufweisen und keine umwelt- oder gesundheitsgefährdende Wirkung zeigen. Als besonders geeignet habe sich Polyethylenglykole der allgemeinen Summenformel $C_{2n}H_{4n+2}O_{n+1}$ herausgestellt:

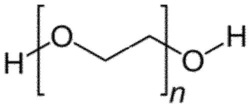

,

wobei n beispielsweise von 1 bis 10 gewählt werden kann. Der Partialdruck der Substanzen bei 298 K sinkt dabei von 5 Pa für n=1 auf $5.47*10^{-8}$ Pa für n = 8. PEGs ab n > 4 gelten als nicht flüchtig. Die Polyethylenglykole weisen zudem außergewöhnlich niedrige Toxizitätswerte auf und sind bis n < 20 vollständig biologisch abbaubar. Zur Einstellung des Wasserdampfpartialdruckes sind die organischen Verbindungen in jedem Mengenverhältnis mit Wasser mischbar.

Polyole im Sinne der Erfindung sind aliphatische Substanzen, welche mindestens zwei -OH Gruppen tragen. Bevorzugt tragen die Polyole mindestes 3, des Weiteren bevorzugt 4 OH-Gruppen. Ein bevorzugter Vertreter aus dieser Gruppe ist beispielsweise das Glycerin. Weiter bevorzugt kann die zweite Komponente b) in einem Gewichtsanteil von größer oder gleich 30 Gew.-% und kleiner oder gleich 90 Gew.-%, weiterhin bevorzugt von größer oder gleich 35 Gew.-% und kleiner oder gleich 85 Gew.-% im Kohlendioxid-Absorbens vorliegen.

Im Verfahrensschritt b) erfolgt das Durchleiten eines Kohlendioxid enthaltenden Luftstroms durch die in Verfahrensschritt a) bereitgestellte Lösung, wobei zumindest ein Teil des Kohlendioxids aus dem Luftstrom am Kohlendioxid-Absorptionsmittel gebunden und der Luftstrom an Kohlendioxid abgereichert wird. Der Luftstrom wird mit der bereitgestellten Lösung in Kontakt gebracht. Das in Kontakt bringen des Luftstroms mit der Flüssigkeit kann dabei auf unterschiedliche Arten und Weisen erfolgen. So ist es beispielsweise möglich, dass der Luftstrom durch die Flüssigkeit in Form sein verteilter Perlen verdüst durchgeleitet wird. Es ist aber auch möglich, dass die Flüssigkeit in Form eines fließenden Filmes bereitgestellt wird, welcher dann den Luftstrom kontaktiert. In sämtlichen Fällen macht es Sinn, dass eine möglichst große Austauschfläche zwischen Luftstrom und Flüssigkeit bereitgestellt wird. Als Funktion der konkreten Ausgestaltung der Flüssigkeit, der Temperatur, des Drucks und der Kontaktzeit wird ein Teil des Kohlendioxids aus dem Luftstrom in die Flüssigkeit übergehen und in dieser gebunden. Die konkreten Wechselwirkungen zwischen Kohlendioxid und Absorptionsmittel können dabei kovalenter oder physikalischer Art sein. Zumindest wird durch die chemische Wechselwirkung des Kohlendioxids mit dem Absorptionsmittel erreicht, dass ein Teil des Kohlendioxids die Flüssigkeit nicht verlässt und insofern der Luftstrom an Kohlendioxid verarmt. Es ist beispielsweise auch möglich, den Luftstrom ein oder mehrmals durch ein und dieselbe Flüssigkeit zu leiten.

Im Verfahrensschritt c) erfolgt das Einleiten der wässrigen Lösung aus Verfahrensschritt b) oder einer wässrigen Lösung umfassend das am Kohlendioxid-Absorptionsmittel gebundene Kohlendioxid in eine mittlere Kammer einer mindestens Drei-Kammer-Elektrolysezelle aus Anodenkammer, Kathodenkammer und mindestens einer zwischen der Anodenkammer und der Kathodenkammer angeordneten, mittleren Kammer, wobei die Drei-Kammer-Elektrolysezelle eine für einwertige Kationen selektive Membran aufweist und Elektrolysieren der wässrigen Lösung unter Freisetzung zumindest eines Teils des Kohlendioxids. Nach dem Absorptionsschritt wird die Lösung mit dem Absorptionsmittel und den daran gebunden Kohlendioxid im Rahmen einer Elektrolyse aufgearbeitet. In der Elektrolysezelle wird die wässrige Lösung also einer elektrischen Spannung ausgesetzt, so dass sich als Funktion der Spannung einen Stromfluss innerhalb der Elektrolysezelle einstellt. Dazu weist die Elektrolysezelle neben den einzelnen durch die Membran abgetrennten Kompartimenten auch zwei Elektroden auf. Üblicherweise werden diese Elektroden als Anode und Kathode bezeichnet. Die Wanderung der Kationen durch die kationenselektive Membran führt zu einem pH-Wert Unterschied zwischen der mittleren Kammer und der Kathodenkammer.

Die Absenkung des pH-Werts in der Zwischenkammer führt dort zur Freisetzung von $CO_2$. Die zur Freisetzung des Kohlendioxids einsetzbaren elektrischen Zellspannungen können, in Abhängigkeit des pH-Wertunterschieds zwischen der Zwischenkammer und der Kathodenkammer, beispielsweise größer oder gleich 1 V, des Weiteren bevorzugt größer oder gleich 1,5 V und weiterhin bevorzugt größer oder gleich 1,75 V betragen. Neben der Freisetzung des Kohlendioxids kann im Rahmen der Elektrolyse auch Wasser elektrolysiert werden, so dass an den Elektroden Wasserstoff und Sauerstoff entstehen. Mit dieser Ausgestaltung des Verfahrens kann die Elektrolysezelle eine mindestens Drei-Kammer-Elektrolysezelle aus Anodenkammer, Kathodenkammer und mindestens einer zwischen der Anodenkammer und der Kathodenkammer angeordneten, mittleren Kammer sein, wobei die Anodenkammer beispielsweise durch eine bipolare Membran und die Kathodenkammer durch die für einwertige Kationen selektive Membran von der mittleren Kammer getrennt sein können, wobei die wässrige Lösung des Verfahrensschrittes c) in die mittlere Kammer der Elektrolyse eingespeist wird. Unabhängig von der Beladung des Luftstromes mit $CO_2$ und weitgehend unabhängig von der Zusammensetzung des Absorbens lassen sich mit $CO_2$ beladene Absorbenzien besonders vorteilhaft mit einer Drei-Kammer-Elektrolyse rezyklieren. Dies kann besonders vorteilhaft im Falle eines Absorbens aus einer Carbonatlösung und gegebenenfalls zusätzlicher absorptionsbeschleunigender Promotoren beschrieben werden. Das intermediär als Hydrogencarbonat gebundene $CO_2$ kann als parallele Reaktion bei der elektrolytischen Erzeugung von Wasserstoff und Sauerstoff freigesetzt werden. Die dabei gebildete Carbonatlösung kann wieder zur $CO_2$-Absorption aus der Luft eingesetzt werden. Ziel der Abtrennung von $CO_2$ aus der Luft ist seine Nutzung als Synthesebaustein beispielsweise in der Herstellung von Kohlenwasserstoffen. Neben der Abtrennung von $CO_2$ ist hierzu die Erzeugung von Wasserstoff notwendig und auch gewünscht. Im Rahmen der Dekarbonisierung wird dieser zukünftig wesentlich elektrolytisch erzeugt.

In einer bevorzugten Ausführungsform des Verfahrens kann die molare Sättigung des Absorptionsmittels mit Kohlendioxid am Anfang des Verfahrensschritts c) größer oder gleich 90 mol-% und kleiner oder gleich 100 mol-% bezogen auf die Konzentration des Absorptionsmittels in der wässrigen Lösung betragen. Zur Durchführung eines besonders energieeffizienten Verfahrens hat sich als bevorzugt herausgestellt, dass das Absorptionsmittel vor der elektrolytischen Behandlung in einem besonders hohen Maße mit Kohlendioxid gesättigt ist. In dieser Ausführungsform kann mit einem besonders geringen Aufwand an Elektronen dafür gesorgt werden, dass ein Großteil des Kohlendioxids ohne weitere Umwandlungsverluste aus der wässrigen Lösung freigesetzt wird. Diese hohen Beladungen lassen sich

beispielsweise durch lange Kontaktzeiten zwischen dem Luftstrom und der wässrigen Lösung erreichen. Weiterhin bevorzugt kann die molare Sättigung größer oder gleich 95 mol-%, des Weiteren bevorzugt größer oder gleich 98 mol-% betragen. Die molare Sättigung gibt dabei den Anteil an Absorptionsmittel an, welcher mit Kohlendioxid beladen ist. Der Anteil ergibt sich im Vergleich zum gesamten vorliegenden Absorptionsmittel.

Innerhalb eines bevorzugten Aspektes des Verfahrens kann das Kohlendioxid-Absorptionsmittel aus der Gruppe der Alkali-Carbonate, Alkali-Salze der Aminosäuren oder Mischungen mindestens zweier Komponenten aus dieser Gruppe ausgesucht sein. In einem wasserbasierenden Kohlendioxid-Absorbens reagieren Kalium- oder Natriumcarbonat entsprechend der nachfolgend für Natriumcarbonat aufgestellten Reaktionsgleichung:

$$Na_2CO_{3(aq)} + H_2O + CO_{2(aq)} \rightarrow 2\ NaHCO_{3(s)}{\downarrow}$$

Die Löslichkeit dieses Absorptionsmittel ändert sich als Funktion der Beladung mit Kohlendioxid, so dass bei atmosphärischen $CO_2$-Konzentrationen unterhalb von oder um 400 ppm eine stetige $CO_2$-Aufnahme und Fällung als Hydrogencarbonat oder einer hydrogencarbonathaltigen Verbindung stattfindet. Dieser Effekt kann beispielsweise durch Zugabe weiterer Absorptionspromotoren gesteigert werden. Beispielsweise kann $Na_2CO_3$ und MEG (Monoethylenglykol)/$H_2O$ und PEG150/$H_2O$ eingesetzt werden. Geeignete Kombination für $K_2CO_3$ sind beispielsweise MEG/$H_2O$ und PEG150/$H_2O$. In diesen Ausgestaltungen ergeben sich besonders große synergistische Effekte. Für das $K_2CO_3$ ergibt sich als Fällungsprodukt im Rahmen des erfindungsgemäßen Kohlendioxid-Absorbens $KHCO_3$. Zusätzlich ist die Badzusammensetzung auch so robust, dass die Ausfällung von Natrium- oder Kaliumhydrogencarbonat durch Zugabe gleichionischer Zusätze, wie beispielsweise NaCl, gesteigert werden kann. Dies ist insbesondere für Carbonat/PEG/-Wasser-Lösungen möglich. Alternativ können aber auch Mischungen aus Alkali-Carbonaten und Aminosäuresalzen oder nur der Einsatz von Alkali-Carbonaten oder Aminosäuresalze als Absorptionsmittel vorteilhaft sein.

In einer bevorzugten Ausführungsform des Verfahrens kann das Kohlendioxid-Absorptionsmittel nach der $CO_2$-Aufnahme Hydrogencarbonat umfassen. Die Aufnahme von Kohlendioxid und die anschließende Umsetzung einer Hydrogencarbonat-Lösung hat gegenüber der Elektrolyse von Carbonatlösungen deutliche Vorteile. Die Stöchiometrie der Umsetzung von $CO_2$ bei der Elektrolyse einer Carbonatlösung ist bekannt. Es gilt für Carbonatlösungen folgender Zusammenhang:

$$K_2CO_3 + 2\ H_2O \rightarrow CO_2\uparrow + H_2\uparrow + ½\ O_2\uparrow + 2\ KOH$$

Für die Freisetzung eines $CO_2$-Moleküls sind auf Basis von Carbonaten zwei Elektronen erforderlich. Die Freisetzung von $CO_2$ aus einer Hydrogencarbonatlösung kann als parallele Reaktion bei der elektrolytischen $H_2$ und $O_2$ Erzeugung genutzt werden und kann über folgende Gleichung ausgedrückt werden:

$$4\ KHCO_3 \rightarrow 2\ CO_2\uparrow + H_2\uparrow + ½\ O\uparrow + 2\ K_2CO_3 + H_2O$$

Vorteilhaft bei der Verwendung einer Hydrogencarbonatlösung ist, dass für die Freisetzung eines $CO_2$-Moleküls nur ein Elektron erforderlich ist. Die gleichzeitige Freisetzung von $CO_2$ aus einer Hydrogencarbonatlösung bei der elektrolytischen Wasserstoff- und Sauerstofferzeugung ist somit äußerst energieeffizient. Thermodynamisch betrachtet ergibt sich die zu überwindende Potentialdifferenz aus der Wasserzerlegung mit 1,23 V und den Überspannungen an der Anode und der Kathode mit zusammen etwa 0,5 V. Die für die Freisetzung des $CO_2$ zu überwindende Potentialdifferenz ist zudem von den Konzentrationsverhältnissen in der Zwischenkammer und der Kathodenkammer abhängig. Diese erzeugen an der kationenselektiven Membran eine Potentialdifferenz von etwa 0,2 V. Neben der elektrochemisch günstigen Stöchiometrie wird in einem Dreikammer-Elektrolyseur die Bildung von $O_2$ an der Anode, die Bildung von $H_2$ an der Kathode und gleichzeitig die Bildung von $CO_2$ in der Zwischenkammer induziert. Stöchiometrisch ergeben sich ½ $O_2$, $H_2$ und 2 $CO_2$ als nahezu reine gasförmige Komponenten in getrennten Volumina der drei Kammern. Es kann also eine aufwendige Trennung der einzelnen Gaskomponenten entfallen. Dieses Prinzip lässt sich generell auf 3 + 2n-Kammern mit n = 0, 1, 2, 3 etc. ausdehnen. Die Lösung wird dann jeweils in die mittleren Kammern eingespeist.

Innerhalb einer weiter bevorzugten Ausgestaltung des Verfahrens kann das Kohlendioxid-Absorptionsmittel im Verfahrensschritt a) Kaliumcarbonat mit einer Konzentration von größer oder gleich 200 g/L und kleiner oder gleich 1200 g/L umfassen. Diese hohen Konzentrationen an Carbonaten in dem Absorptionsmitteln führen überraschenderweise dazu, dass Kohlendioxid verlässlich und schnell auch aus Luftströmen aufgenommen werden kann, welche nur geringe Kohlendioxid-Konzentrationen aufweisen. Dies kann beispielsweise Umgebungsluft mit einer Kohlendioxid-Konzentration von kleiner oder gleich 400 ppm sein. Durch die sehr hohe Konzentration an Carbonaten werden die sich bildenden Hydrogencarbonate nahe an ihrer Sättigungskonzentration gefahren, sodass diese vorteilhafterweise schon unter den Bedingungen im Absorber aus der Flüssigkeit ausfallen. Dadurch kann eine schnelle und nahezu vollständige Aufnahme von Kohlendioxid auch bei insgesamt geringen Kohlendioxidkonzentrationen erreicht werden. Vorteilhafterweise kann die Kaliumcarbonat-Konzentration größer oder gleich 300 g/L und kleiner oder gleich 1000 g/L, weiterhin bevorzugt größer

oder gleich 400 g/L und kleiner oder gleich 900 g/L und weiter bevorzugt größer oder gleich 500 g/L und kleiner oder gleich 850 g/L betragen.

Innerhalb einer Ausgestaltung umfasst das Kohlendioxid-Absorptionsmittel nach der $CO_2$-Aufnahme Hydrogencarbonat und das Kohlendioxid-Absorptionsmittel umfasst im Verfahrensschritt a) Kaliumcarbonat mit einer Konzentration von größer oder gleich 200 g/L und kleiner oder gleich 1200 g/L.

Innerhalb eines weiter bevorzugten Aspektes des Verfahrens können mindestens 2-Kammern der 3-Kammer-Elektrolsezelle durch eine bipolare Membran voneinander separiert sein. Insbesondere die Verwendung eine bipolare Membran im Rahmen einer 3-Kammer-Elektrolysezelle kann zu einem besonders energetisch effizienten Verfahren zur Entfernung des Kohlendioxids aus der Lösung beitragen. Bevorzugt kann die bipolare Membran zumindest eine der mittleren Kammern von der Anodenkammer abgrenzen. In diesem Aufbau mit bipolarer Membran kann auch eine für einwertige Kationen selektive Membran eine der mittleren Kammern von der Kathodenkammer trennen.

In einer weiter bevorzugten Ausführungsform des Verfahrens kann in einen zweiten Verfahrensteilschritt b') das Kohlendioxid-Absorptionsmittel mit absorbiertem Kohlendioxid ausgefällt und von der Lösung des Verfahrensschrittes b) abgetrennt werden, wobei im Verfahrensschritt c) eine wässrige Lösung des ausgefallenen Kohlendioxid-Absorptionsmittels mit absorbiertem Kohlendioxid eingespeist wird, wobei die an Kohlendioxid-Absorptionsmittel mit absorbiertem Kohlendioxid verarmte Mutterlösung zumindest zum Teil in die Kathodenkammer der Elektrolysezelle geleitet wird. Um eine besonders elektrisch effiziente Desorption des Kohlendioxids aus der Absorptionsflüssigkeit zu erreichen hat sich als vorteilhaft herausgestellt, dass in Summe nur Absorptionsmittel zu Elektrolyse geführt werden, welche auch mit Kohlendioxid beladen sind. Im Falle einer reinen Absorption von Kohlendioxid an einem Absorptionsmittel wird sich als Funktion der Umgebungsbedingungen ein Gleichgewicht einstellen. Als Funktion der Lage des Gleichgewichts wird das Absorptionsmittel mal mehr oder weniger mit Kohlendioxid beladen vorliegen. Möchte man im Rahmen der Elektrolyse nur beladene Absorptionsmittel verwenden, so kann man beispielsweise diese mit Kohlendioxid beladenen Absorptionsmittel aus der Lösung abtrennen und diese abgetrennten Mittel dann im Rahmen einer neuen Lösung zur Elektrolyse weiterleiten. In diesen Fällen ist sichergestellt, dass die elektrolysierte Lösung keine unbeladenen Absorptionsmittel aufweist. Dies ist insbesondere in den Fällen vorteilhaft, in denen die nicht beladenen Absorptionsmittel im Rahmen der Elektrolyse unter Verbrauch von Elektronen umgewandelt werden. Durch die Bereitstellung beladener Absorptionsmittel entfällt dieser Beitrag und es kann die Desorption von Kohlendioxid mit einem sehr geringen Verlustanteil an Elektronen über die weitere Umwandlung erfolgen. Dieses Verfahren kann sich insbesondere bei der Verwendung von Carbonat als Absorptionsmittel eignen. Die Carbonate können durch Absorption von Kohlendioxid in Hydrogencarbonate umgewandelt und die Hydrogencarbonate aus den wässrigen Lösungen ausgefällt werden. Dadurch werden Reaktionen von Carbonat im Rahmen der Elektrolyse verhindert.

In einer weiter bevorzugten Ausführungsform des Verfahrens kann der pH-Wert in der mittleren Kammer größer oder gleich pH 7,8 und kleiner oder gleich pH 8,8, der pH-Wert in der Kathodenkammer größer oder gleich pH 11 und kleiner oder gleich pH 13,5 und der Unterschied in den pH-Werten der mittleren Kammer und der Kathodenkammer während der Elektrolyse größer oder gleich 2,2 und kleiner 5,7 betragen. Innerhalb dieser pH-Grenzen lässt sich das System thermodynamisch vorteilhaft betreiben. Die erforderlichen Reaktionsgleichgewichte stellen sich schnell ein und auch aus elektrochemischer Sicht sind diese Unterschiede vorteilhaft. Diese Grenzen können insbesondere bei der Verwendung von Hydrogencarbonaten als Absorptionsmittel genutzt werden.

In einer weiteren Ausgestaltung des Verfahrens kann die Konzentration an Kohlendioxid-Absorptionsmittel mit absorbiertem Kohlendioxid beim Einspeisen in die Elektrolyse oder gleich 2 mol/L und kleiner oder gleich 8 mol/L betragen. Mit diesen Konzentrationsgrenzen lassen sich mit einer hohen Aktivität hohe Mengen an Kohlendioxid freisetzen. Zudem können diese Konzentrationsgrenzen geeignet sein, um den Zellaufbau über lange Zeiten betreiben zu können.

Nach einer bevorzugten Charakteristik des Verfahrens kann die Leitfähigkeit des Eingangsstroms in einen mittleren Teil der Elektrolyse im Verfahrensschritt c) größer oder gleich 0,1 S/cm und kleiner oder gleich 0,5 S/cm betragen. Diese Leitfähigkeiten für den Eingangsstrom in einen oder mehrere Teile der 3-Kammer-Elektrolyse haben sich für die energetische Effizienz der Elektrolyse als besonders vorteilhaft herausgestellt. Die Leitfähigkeit dieses mit Kohlendioxid beladenen wässrigen Eingangsstromes wird dabei unter Betriebsbedingungen, insbesondere Druck und Temperatur, mittels dem Fachmann bekannter Verfahren bestimmt. Es ist beispielsweise möglich, dass die Leitfähigkeit des wässrigen Eingangsstromes über einen konduktiven Leitfähigkeitssensor ermittelt werden. Diese Leitfähigkeiten können insbesondere im Zusammenhang mit der Elektrolyse wässriger Hydrogencarbonat-Lösungen sinnvoll sein. Es ergeben sich sehr hohe Hydrogencarbonat-Konzentrationen, welche die Leitfähigkeit des Elektrolyten in dieser Kammer bevorzugt hoch halten.

In einer weiter bevorzugten Ausführungsform des Verfahrens kann in der Anodenkammer der mindestens 3-Kammerelektrolyse wässrige KOH-Lösung als Elektrolyt verwendet werden. Für die Anodenkammer kann bevorzugt Kaliumhydroxid (KOH) als Elektrolyt gewählt werden, da dieser Elektrolyt unter den Betriebsbedingungen der Elektrolyse eine entsprechend hohe Leitfähigkeit aufweisen kann.

Innerhalb eines bevorzugten Aspektes des Verfahrens kann die Leitfähigkeit der in der Anodenkammer vorliegenden wässrigen KOH-Lösung unter Betriebsbedingungen größer oder gleich 0,5 S/cm und kleiner oder gleich 1,3 S/cm betragen. Dieser Leitfähigkeitsbereich und die Verwendung von KOH als Elektrolyt können zu einem besonders elektrisch effizienten Umwandlungsprozess unter Freisetzung von Kohlendioxid im Rahmen der Elektrolyse beitragen.

In einer weiter bevorzugten Ausführungsform des Verfahrens kann die Leitfähigkeit der zu Beginn der Elektrolyse in der Kathodenkammer vorliegenden Elektrolytlösung unter Betriebsbedingungen größer oder gleich 0,4 S/cm und kleiner oder gleich 1,15 S/cm betragen. In die Kathodenkammer kann zur Erreichung dieser Leitfähigkeiten beispielsweise eine Carbonat-/Hydrogencarbonatlösung mit einer Hydrogencarbonatkonzentration nahe der Löslichkeitsgrenze geleitet werden. Diese hohen Konzentrationen können die elektrische Effizienz des Gesamtverfahrens verbessern. Zudem weisen Lösungen mit diesen Leitfähigkeiten einen ausreichenden Anteil an Kaliumcarbonat auf. Über den Kaliumcarbonat-Anteil in der Lösung kann vorteilhafterweise auch der Wasserdampfdruck des Absorptionsmittels gesteuert werden. Je nach vorliegender Luftfeuchtigkeit kann für einen bestimmten Bereich der Wasserdampfdruck des Absorptionsmittels so angepasst werden, dass weder Wasser aus dem Absorptionsmittel verdampft noch Wasser aus der Atmosphäre in das Absorptionsmittel aufgenommen wird. Weiterhin ist vorteilhaft, dass in diesen Leitfähigkeitsbereichen die durch die kationenselektive Membran gewanderten $K^+$-Ionen, aus dem in der $KHCO_3/K_2CO_3$-Lösung vorhandenem $KHCO_3$ ebenfalls $K_2CO_3$ bilden.

In einer weiteren Ausgestaltung des Verfahrens kann nach dem Verfahrensschritt b) Hydrogencarbonat vom Absorptionsmittel abgetrennt und unter mindestens Zusatz von Wasser als wässrige Lösung in die mindestens 3-Kammer-Elektrolyse gegeben werden. In dieser Verfahrensvariante kann auf das zumindest teilweise Einspeisen der an Kohlendioxid verarmten Mutterlösung in die Kathodenkammer der Elektrolysezelle verzichtet werden. Die Fällung und Aufkonzentrierung des Kohlendioxid-Absorptionsmittel mit absorbiertem Kohlendioxid, beispielsweise in Form von Hydrogencarbonat, kann im Rahmen der 3-Kammer-Elektrolyse zu schon vorher beschriebenen energetischen Vorteilen führen.

Im Rahmen einer weiterhin bevorzugten Ausgestaltung kann die Lösung des Kohlendioxid-Absorptionsmittels im Verfahrensschritt a) eine Verbindung mit einer Aminfunktion als Kohlendioxid-Absorptionsbeschleuniger umfassen, wobei die Verbindung mit einer Aminfunktion bei 20°C und in einer Konzentration von 1 mol/kg eine Carbamat-Gleichgewichtskonstante, ermittelt aus Kohlendioxid-Partialdruckmessungen, von größer oder gleich 0,01 und kleiner oder gleich 0,75 aufweist. Unter der Carbamat-Gleichgewichtskonstante wird folgende Gleichgewichtskonstante verstanden:

$$K_{carb} = \frac{[RNH] * [HCO3]}{[RNHCOO]}$$

Die Gleichgewichtskonstante $K_{carb}$ (in mol/L) ist eine Stoffgröße, welche die Stabilität von Carbamaten beschreibt, die während der $CO_2$-Absorption mit den Absorptionsbeschleunigern in der Absorptionsflüssigkeit gebildet werden. Eine niedrige Carbamatstabilität wird durch einen hohen Wert für $K_{carb}$ ausgedrückt. Dies bedeutet, dass gebildetes Carbamat zu Hydrogencarbonat und dem Amin zurückreagiert. Insbesondere letzteres ist im vorliegenden Fall erwünscht und führt zu einer verbesserten Kohlendioxid-Aufnahmerate. Insbesondere können diese Amin-Zusätze dazu beitragen, dass auch Luftströme mit relativ geringen Kohlendioxid-Gehalten effizient vom Kohlendioxid befreit werden können. Geeignete Amine zur Beschleunigung der Aufnahme bilden beispielsweise, auf Grund ihres sehr geringen Dampfdrucks, die Aminosäuren. Eine geeignete Carbamatstabilität weist beispielsweise die Aminosäure Pipecolinsäure auf. Weiterhin bevorzugt können Aminosäuren mit einer Carbamat-Gleichgewichtskonstante bei 20°C von größer oder gleich 0,02 und kleiner oder gleich 0,5 und weiterhin bevorzugt von größer oder gleich 0,03 und kleiner oder gleich 0,25 verwendet werden.

Des Weiteren erfindungsgemäß ist die Verwendung des erfindungsgemäßen Verfahrens zur Absorption von Kohlendioxid aus einem Luftstrom, wobei der Luftstrom eine Kohlendioxidkonzentration von größer oder gleich 100 ppm und kleiner oder gleich 650 ppm aufweist. Das erfindungsgemäße Verfahren kann sich insbesondere dazu eignen, dass Luftströme mit sehr geringen Kohlendioxidkonzentrationen weiter von Kohlendioxid befreit werden. Diese Bedingungen führen bei Stand der Technik Bädern meist zu einer unkontrollierbaren Aufnahme oder Abgabe von Wasser aus der Lösung, welches ein enges Prozessmonitoring mit entsprechendem Regelungsaufwand erfordert. Das hier vorgestellte Verfahren ermöglicht eine verlässliche und kontinuierliche Aufnahme von Kohlendioxid aus diesen kohlendioxidarmen Strömen und eine effiziente und energetisch vorteilhafte Desorption im Rahmen der Elektrolyse. Es können auch Verfahren etabliert werden, welche eine Aufnahme von Kohlendioxid aus der Umgebungsluft effizient durchführen und eine elektrisch geeignete Freisetzung im Rahmen einer 3-Kammer-Elektrolyse gewährleisten können.

Des Weiteren bilden auch die jeweiligen 3-Kammer-Elektrolyse-Apparaturen erfindungsgemäße Ausgestaltungen.

Weitere Vorteile und vorteilhafte Ausgestaltungen der erfindungsgemäßen Gegenstände werden durch die Figuren veranschaulicht und in den nachfolgenden Beispielen erläutert. Dabei ist zu beachten, dass die Figuren nur beschreibenden Charakter haben und nicht dazu gedacht sind, die Erfindung in irgendeiner Form einzuschränken.

Es zeigen die

Fig. 1 eine nicht erfindungsgemäße Zweikammer-Elektrolyse mit Rückführung der elektrolysierten Lösung aus der Anoden- in die Kathodenkammer;
Fig. 2 eine nicht erfindungsgemäße Zweikammer-Elektrolyse mit Rückführung der elektrolysierten Lösung aus der Anoden- in die Kathodenkammer und einer funktionalisierten Ni-Anode;
Fig. 3 eine nicht erfindungsgemäße Dreikammer-Elektrolyse mit Rückführung der elektrolysierten Lösung aus der Mittleren- in die Kathodenkammer;
Fig. 4 eine nicht erfindungsgemäße Fünfkammer-Elektrolyse mit Rückführung der elektrolysierten Lösung aus der Mittleren- in die Kathodenkammer;
Fig. 5 eine erfindungsgemäße Dreikammer-Elektrolyse mit separaten Fällungsschritt des mit $CO_2$ gesättigten Absorptionsmittel;
Fig. 6 eine nicht erfindungsgemäße Zweikammer-Elektrolyse mit separater Freisetzung des $CO_2$ in einer weiteren Kammer;
Fig. 7 eine nicht erfindungsgemäße Zweikammer-Elektrolyse mit separaten Fällungsschritt des mit $CO_2$ gesättigten Absorptionsmittel und Freisetzung des $CO_2$ aus $KHCO_3$ durch $KHSO_4$;
Fig. 8 eine nicht erfindungsgemäße Zweikammer-Elektrolyseeinheit mit separaten Fällungsschritt des mit $CO_2$ gesättigten Absorptionsmittel;
Fig. 9 den Stromverlauf und die Kohlendioxidentwicklung eines Absorbens auf Hydrogencarbonatbasis in einer Drei-Kammerelektrolyse;
Fig. 10 den Stromverlauf und die Kohlendioxidentwicklung eines Absorbens auf Aminosäurebasis in einer Drei-Kammerelektrolyse;
Fig. 11 die Löslichkeit von $KHCO_3$ in $K_2CO_3$ sowie den $CO_2$-Partialdruck bei der Sättigung mit $KHCO_3$;
Fig. 12 die Massentransferraten für die Aufnahme von $CO_2$ in eine $KHCO_3/K_2CO_3$-Lösung bei 323 K;
Fig. 13 die Strom/Spannungskennlinie der Elektrolyse einer 1 molalen KOH-Lösung;
Fig. 14 die Strom/Spannungskennlinie der Elektrolyse einer 1 molalen $KHCO_3$-Lösung im Anoden- und einer 0,5 molalen $K_2CO_3$-Lösung im Kathodenraum im Vergleich zu der in der Fig.13 gezeigten Elektrolyse mit einer 1 molalen KOH-Lösung im Anoden- und Kathodenraum;
Fig. 15 die Strom/Spannungskurve einer 0,5 molalen $K_2SO_4$ Lösung, pH = 7,4 in der Anodenkammer und einer 1 molalen $K_2CO_3$-Lösung, pH = 11,8, in der Kathodenkammer;
Fig. 16 die Strom/Spannungskennlinie einer erfindungsgemäßen Elektrolyse in einem Dreikammersystem.

Die Figur 1 zeigt eine nicht erfindungsgemäße Zweikammer-Elektrolyse mit Rückführung der elektrolysierten Lösung aus der Anoden- in die Kathodenkammer. Dies ist ein einfacher Aufbau einer Elektrolyseeinheit zur Elektrolyse von $H_2O$ und Freisetzung von $CO_2$ aus einer Absorptionsflüssigkeit für Kohlendioxid. Zusätzlich ist hier gezeigt, dass eine Rückführung der elektrolysierten Lösung aus der Anoden- in die Kathodenkammer erfolgt. Diese Elektrolyse kann beispielsweise mit einem Absorbens aus einem Salz erfolgen, welches in wässriger Lösung in Kationen und Anionen zerfällt. Der Anoden- und Kathodenraum werden durch eine kationenselektive Membran getrennt. Im Laufe der Elektrolyse sinkt der pH-Wert an der Anode während der pH-Wert an der Kathode steigt. Da die Aufnahme von $CO_2$ in eine wässrige Lösung für die bekannten $CO_2$-Absorbenzien, Laugen, Carbonate, Aminosäuresalze und Amine -primär, sekundär, tertiär- immer mit einer Abnahme des pH-Wertes verbunden ist, lässt sich $CO_2$ durch Reduktion des pH-Werts immer aus der Lösung austreiben. Besonders vorteilhaft ist es, wenn das $CO_2$-Absorbens das Kation selbst enthält. Dies sind beispielsweise die Laugen sämtlicher Alkalimetalle, Carbonate sämtlicher Alkalimetalle und die Aminosäuresalze sämtlicher Alkalimetalle. Bei $CO_2$-Absorbenzien die keine Alkalimetalle enthalten kann ein neutrales Salz, welches nicht elektrolysiert wird, beispielsweise $K_2SO_4$ oder ähnliche, der Absorptionslösung hinzugefügt werden. Daraus resultiert eine prinzipielle Anwendbarkeit des Elektrolyseprinzips auf eine Vielzahl bekannter $CO_2$-Absorbenzien. Der neben der Elektrolyse von $H_2O$ erforderliche Energieaufwand zur $CO_2$-Freisetzung ergibt sich aus dem für die $CO_2$-Austreibung erforderlichem pH-Wert Unterschied zwischen der mittleren Kammer und dem Kathodenraum und der daraus resultierenden Potentialdifferenz. Diese ist substanzspezifisch und kann zwischen 0,8 V und 0,25 V variieren. Ferner ist die Anzahl der Elektronen, die zur Freisetzung eines $CO_2$-Moleküls benötigt werden, ebenfalls substanzspezifisch und von der, entsprechend dem $CO_2$-Partialdruck im Absorber, erzielbaren Beladungskapazität abhängig. Die Anzahl der erforderlichen Elektronen variiert zwischen 1 und 2. Ein genereller Unterschied zu den bekannten Verfahren kann in dieser Ausgestaltung darin gesehen werden, dass die in der Anodenkammer von $CO_2$ abgereicherte Lösung, vor der erneuten $CO_2$-Absorption in die Kathodenkammer geleitet wird. Dort findet eine Neutralisation statt, welches den pH-Wert in der Kathodenkammer senkt. Die dadurch erzielbare Senkung der Potentialdifferenz reduziert den erforderlichen Energieaufwand zur $CO_2$-Freisetzung wesentlich. Die Vorteile des Verfahrens ergeben sich insbesondere in der generellen Anwendbarkeit; dem einfachen verfahrenstechnischen Aufbau, da diese direkt an einer $CO_2$-Absorberkolonne betrieben werden kann und dem durch die Verwendung bipolarer Membranen stackweisen Aufbau der Elektrolysezelle.

Die Figur 2 zeigt einen nicht erfindungsgemäßen Teilverfahrensschritt in Form einer ZweiKammer-Elektrolyse eines mit Kohlendioxid-beladenen Luftstromes mit Nickelhydroxid-Anode. Ein Absorbens mit einer Alkalicarbonat-Komponente wird aus einem Luftstrom mit Kohlendioxid beladen. Das Carbonat wird, zumindest teilweise, in Hydrogencarbonat umgewandelt, welches in den Anodenraum einer Zwei-Kammerelektrolyse eingeleitet wird. Die Elektrolysezelle weist eine Alkali-durchlässige Membran auf, welche den Anoden- vom Kathodenraum trennt. Bei der Anode handelt es sich um eine poröse Anode, welche in der Lage ist Sauerstoff zu binden. Insofern verlässt den Anodenraum nur das gebildete Kohlendioxid. Im Kathodenraum wird Wasserstoff gebildet. Insofern fallen die unterschiedlichen Gase an unterschiedlichen Orten an und müssen nicht aufwendig voneinander getrennt werden. Die Anode kann dann von Zeit zu Zeit thermisch unter Sauerstoffabgabe regeneriert werden. Es ergeben sich folgende Reaktionen:

Anode

$$2\ KHCO_3 \rightarrow 2\ K^+ + 2\ HCO_3^-$$

$$2\ HCO_3^- \rightarrow 2\ CO_2 + 2\ OH^-$$

$$2\ Ni(OH)_2 + 2\ OH^- \rightarrow 2\ NiOOH + 2\ H_2O + 2\ e^-$$

Als Gesamtreaktion ergibt sich:

$$(KHCO_3 + Ni(OH)_2 \rightarrow K^+ + CO_2 + NiOOH + e^-) \times 2$$

An der Kathode finden folgende Reaktionen statt:

$$4\ H_2O \rightarrow 2\ H_3O^+ + 2OH^-$$

$$2\ H_3O^+ + 2\ e \rightarrow H_2 + 2\ H_2O$$

$$2\ KHCO_3 + 2\ K^+ + 2\ OH^- \rightarrow 2\ K_2CO_3 + 2\ H_2O$$

Insgesamt ergibt sich im Kathodenraum eine Gesamtreaktion von:

$$2\ KHCO_3 + 2\ K^+ + 2\ e \rightarrow 2\ K_2CO_3 + H_2$$

Die Figur 3 zeigt einen nicht erfindungsgemäßen Teilverfahrensschritt in Form einer Drei-Kammer-Elektrolyse eines mit Kohlendioxid-beladenen Absorbens. Ein Absorbens auf Carbonat-Basis kann beispielsweise aus einem Luftstrom, beispielsweise Umgebungsluft oder industrielle Abluft, mit Kohlendioxid beladen werden. Durch die Aufnahme erfolgt eine zumindest partielle Umwandlung des Carbonats in Hydrogencarbonat. Die hydrogencarbonathaltige Lösung wird in die mittlere Kammer einer zumindest drei Kammern umfassenden Elektrolyseeinheit gegeben. Die mittlere Kammer ist mit einer bipolaren Membran gegenüber dem Anodenraum und mittels einer für Kalium, oder allgemein Alkali-Ionen, durchlässigen Membran gegenüber dem Kathodenraum abgegrenzt. Durch Anlegen einer Spannung wird im Anodenraum Sauerstoff, im Kathodenraum Wasserstoff und im mittleren Raum Kohlendioxid entwickelt. Die einzelnen Gasströme können separat aufgefangen werden. Die an Kohlendioxid verarmte Lösung in der mittleren Kammer weist nun einen höheren Carbonat- und einen niedrigeren Hydrogencarbonatanteil auf. Diese rezyklierte Lösung kann wieder als Absorbens für einen kohlendioxidhaltigen Luftstrom eingesetzt werden. In Form von Reaktionsgleichungen ergeben sich an den unterschiedlichen Reaktionsorten folgende Umsetzungen:

An der Anode:

$$2\ OH^- \rightarrow H_2O + ½\ O_2 + 2e^-$$

An der bipolaren Membran:

$$2\ H_2O \rightarrow 2\ H^+ + 2\ OH^-$$

In der Zwischenzelle:

$$2\ HCO_3^- + 2\ H^+ \rightarrow 2\ CO_2 + 2\ H_2O$$

In Summe ergibt sich als Gesamtreaktion der Zwischenzelle:

$$2\ KHCO_3 + 2\ H^+ \rightarrow 2\ K^+ + 2\ CO_2 + 2\ H_2O$$

An der Kathode finden folgende Reaktionen statt:

$$4\ H_2O \rightarrow 2\ H_3O^+ + 2\ OH$$

$$2\ H_3O^+ + 2\ e^- \rightarrow H_2 + 2\ H_2O$$

$$2\ KHCO_3 + 2\ K^+ + 2\ OH^- \rightarrow 2\ K_2CO_3 + 2\ H_2O$$

Insgesamt ergibt sich somit für den Kathodenraum:

$$2\ KHCO_3 + 2\ K^+ + 2\ e^- \rightarrow 2\ K_2CO_3 + H_2$$

Der Drei-Kammeraufbau ist in Bezug auf die mittlere Einheit beliebig erweiterbar. Insofern können mit nur leicht veränderten elektrochemischen Eigenschaften mit dem erfindungsgemäßen Absorbens oder beispielsweise auch mit reinen Hydrogencarbonat- oder Aminosäurelösungen auch 5-, 7-, 9- oder allgemein 3+2n-Kammeraufbauten verwendet werden.

Die Figur 4 zeigt eine nicht erfindungsgemäße Fünfkammer-Elektrolyse mit Rückführung der elektrolysierten Lösung aus der mittleren- in die Kathodenkammer. Aufgrund des erfindungsgemäßen Aufbaus können mehrere "mittlere" Kammern zur Freisetzung von Kohlendioxid genutzt werden. Es werden entsprechend mehrere bipolare Membranen und kationenselektive Membranen eingesetzt.

Die Figur 5 zeigt eine erfindungsgemäße Dreikammer-Elektrolyse mit separaten Fällungsschritt des mit $CO_2$ gesättigten Absorptionsmittels. Nach der Absorption des Kohlendioxids wird das mit Kohlendioxid gesättigte Absorptionsmittel zusammen ausgefällt. Das ausgefallene Mittel kann dann in 100% reiner Form in die Elektrolyse gegeben werden. Durch dieses Verfahren kann sichergestellt werden, dass im Rahmen der Elektrolyse nur eine Spezies elektrolysiert wird. Dies kann die elektrischen Effizienzparameter des Gesamtverfahrens verbessern. Der separate Fällungsschritt kann ebenfalls einer Zweikammer-Elektrolyse vorgeschaltet werden.

Die Figur 6 zeigt eine nicht erfindungsgemäße Zweikammer-Elektrolyse mit separater Freisetzung des $CO_2$ in einer weiteren Kammer. Zur Trennung der einzelnen Gasströme der Elektrolyse kann die Freisetzung von Kohlendioxid prinzipiell auch in einem außerhalb der Elektrolysezelle angeordnetem Kompartiment erfolgen. Die Freisetzung erfolgt durch Druck und/oder Temperaturänderung. Nach der Kohlendioxid-Freisetzung kann die Lösung in die Kathodenkammer geleitet werden. Vor der Elektrolyse kann ein separater Fällungsschritt durchgeführt werden. Die mit $KHCO_3$ angereicherte Lösung wird in die Anodenkammer und die verarmte Lösung in die Kathodenkammer eingespeist (Figur 5).

Die Figur 7 zeigt eine nicht erfindungsgemäße Zweikammer-Elektrolyse mit separaten Fällungsschritt des mit $CO_2$ gesättigten Absorptionsmittel. In dieser Variante erfolgt eine Vorabfällung des gesättigten Absorbens. Das Fällungsprodukt, $KHCO_3$ wird als Feststoff oder Schlamm in eine $KHSO_4$ / $K_2SO_4$ - Lösung überführt wobei entsprechend der folgenden Reaktionsgleichung:

$$KHCO_3 + KHSO_4 \rightarrow K_2SO_4 + H_2O + CO_2\uparrow$$

$CO_2$ freigesetzt wird.

Treibende Kraft hierbei ist, dass $KHSO_4$, pH = 0,7 entsprechend einer 10 Gew.-%igen Lösung, eine stärkere Säure als $KHCO_3$, pH = 7,9 entsprechend einer 10 Gew.-%igen Lösung, darstellt. Die mit $K_2SO_4$ angereicherte $KHSO_4$/$K_2SO_4$-Lösung wird in die Anodenkammer geleitet, dort erfolgt, entsprechend der Gesamtreaktion im Anoden-

raum:

$$2\,K_2SO_4 + H_2O \rightarrow 2\,K^+ + 2\,KHSO_4 + 1/2O_2 + 2e^-$$

die Freisetzung von $O_2$ unter Bildung von $KHSO_4$.

Die nun mit $KHSO_4$ angereicherte $KHSO_4$ / $K_2SO_4$ - Lösung wird wieder zurück in das Reaktionsgefäß zur Freisetzung des $CO_2$ geleitet. Im Kathodenraum erfolgt die Freisetzung von $H_2$, gleichzeitig wird die $KHCO_3/K_2CO_3$-Lösung mit $K_2CO_3$, zur erneuten $CO_2$-Absorption, angereichert:

$$2\,KHCO_3 + 2\,K^+ + 2e^- \rightarrow 2\,K_2CO_3 + H_2$$

Im Vergleich zur Elektrolyse von $KHCO_3$ (Figur 14) ist für die Elektrolyse von $KHSO_4$, auf Grund des niedrigeren pH-Wertes ein um etwa 0,2 V höherer Spannungsabfall an der kationenselektiven Membran zu beobachten. Die Verfahrensvariante dargestellt in Figur 7 ist somit ein energieeffizientes Verfahren für die Freisetzung von $CO_2$ und $O_2$ in getrennten Volumina.

Die Figur 8 als Ausschnitt aus Figur 4 einen erweiterbaren Stack, welcher durch bipolare Membrane abgetrennt ist. Zudem ist ein separater Fällungsschritt des mit $CO_2$ gesättigten Absorptionsmittel der Elektrolyse vorgeschaltet. Der separate Fällungs- und Auflösungsschritt kann die elektrische Effizienz der Elektrolyse steigern, da in diesen Fällen nur Hydrogencarbonat und kein Carbonat in die Elektrolysezelle gelangt.

Die Figur 9 zeigt den Stromverlauf und die Kohlendioxidentwicklung eines Absorbens auf Hydrogencarbonatbasis in einer Drei-Kammerelektrolyse. Das Absorbens basiert auf einer 10 Gew.-%igen $KHCO_3$-Lösung und in der Figur ist die gemessene Stromstärke und der bestimmte $CO_2$-Volummenstrom als Funktion der Messzyklen dargestellt. Aufgetragen sind die Daten der Messzyklen von 10000 bis 11000, wobei das Zeitintervall eines Messzyklus 1 Sekunde beträgt. Die Messung erfolgte bei einer Temperatur von 20°C. Eingesetzt wurden Elektrolytlösungen mit den Inhaltsstoffen: Anode: KOH 5,4 Gew.%; Zwischenkammer: $KHCO_3$ 10 Gew.-%; Kathode: $KHCO_3$ 10 Gew.-%. Der fluktuierende Stromfluss ist auf die Blasenbildung und Ablösung an der Oberfläche der bipolaren Membran zurückzuführen. Aus einem ähnlichen Grund schwankt auch der $CO_2$-Gasmengenstrom etwas. Das stöchiometrische Verhältnis der freigesetzten Gasmengen entsprach in etwa dem Verhältnis: 2:1:1/2 für $CO_2$, $H_2$, $O_2$. Die in dem einfachen Versuchsaufbau erzielte Faraday-Effektivität bezogen auf $CO_2$ betrug etwa 80%.

Die Figur 10 zeigt den Stromverlauf und die Kohlendioxidentwicklung eines Absorbens auf Aminosäurebasis in einer Drei-Kammerelektrolyse. Aufgetragen ist die eingesetzte Stromstärke sowie der erzielte $CO_2$-Gasmengenstrom bei der Elektrolyse einer mit $CO_2$ beladenen Aminosäuresalzlösung im Dreikammer-Elektrolyseur. Die Messung erfolgte ebenfalls bei einer Temperatur von 20°C. Eingesetzt wurden Elektrolytlösungen folgender Zusammensetzung: Anode: KOH, 5,4 Gew.-%; Zwischenkammer: Beladene Aminosäuresalzlösung mit Prolin, 10 Gew.-%; Kathode: Beladene Aminosäuresalzlösung Prolin 10 Gew.-%. Die $CO_2$-Beladung erfolgte vor der Elektrolyse in einem Blasensäulenreaktor durch Durchleiten eines 14 vol.-%igen $CO_2$-Gasstroms. Der gemessene fluktuierende Stromfluss ist auch hier auf die Blasenbildung und Ablösung an der Oberfläche der bipolaren Membran zurückzuführen. Gleiches gilt für die Schwankungen im $CO_2$-Gasmengenstrom. Das stöchiometrische Verhältnis der freigesetzten Gasmengen entsprach in etwa dem Verhältnis: 1:1:1/2 für $CO_2$, $H_2$, $O_2$. Die in diesem einfachen Versuchsaufbau erzielte Faraday-Effektivität bezogen auf $CO_2$ betrug etwa 85%.

Die Figur 11 zeigt die Löslichkeit von $KHCO_3$ in $K_2CO_3$ sowie den $CO_2$-Partialdruck bei der Sättigung mit $KHCO_3$. Die aufgetragene Linie entspricht der Löslichkeit von $KHCO_3$, linke Ordinate, in einer $K_2CO_3$-Lösung bei 293 K. Der berechnete und experimentell bestätigte (offene Kreise) $CO_2$-Partialdruck ist als gestrichelte Linie, rechte Ordinate, dargestellt. Der Auftragung kann entnommen werden, dass mit einer $K_2CO_3$-Konzentration von > 40 g/l, $KHCO_3$ unterhalb einer $CO_2$-Konzentration von 140000 Pa aus der Lösung ausfällt. Die $CO_2$-Absorption aus Rauchgasen in eine $K_2CO_3$-Lösung und Fällung des absorbierten $CO_2$ als $KHCO_3$ ist ab einer Konzentration von $K_2CO_3$ > 40 g möglich. Die Absorption von $CO_2$ aus der Luft, mit einer $CO_2$-Konzentration von etwa 400 ppm, und Fällung als $KHCO_3$ ist ab einer $K_2CO_3$-Konzentration von 560 g/l zu beobachten.

Figur 12 zeigt die experimentell bestimmten Massentransferraten für die Aufnahme von $CO_2$ in eine $KHCO_3/K_2CO_3$-Lösung bei 323 K. Als $CO_2$-Absorptionspromotor wurde das Kaliumsalz der Pipecolinsäure in einer Konzentration von 2 mol/l zugegeben. Die $K_2CO_3$-Konzentration wurde während der Messzeit stufenweise von 138,25 g/kg auf 542,5 g/kg erhöht. $KHCO_3$ wurde ebenfalls in einem Konzentrationsbereich von 0 bis 440 g/kg portionsweise hinzugefügt. Die Bestimmung der $CO_2$-Aufnahmerate erfolgte so entlang der $KHCO_3$-Sättigungsgrenze bei zunehmender $K_2CO_3$-Konzentration. Die $CO_2$-Aufnahmerate sinkt mit zunehmender $K_2CO_3$-Konzentration und bei Zugabe von $KHCO_3$ bis zum Erreichen der Sättigungsgrenze. Die $CO_2$-Massentransferrate ist mit einem Durchschnittswert von 0,08 mol/s $m^2$ bar zur großtechnischen Verwendung einer Packungskolonne ausreichend.

Figur 13 zeigt die Strom/Spannungskennlinie der Elektrolyse einer 1 molalen KOH-Lösung mit Hilfe des in Figur 1 skizzierten Aufbaues. Der Anoden- und Kationenraum sind durch eine kationenselektive Membran getrennt. Die

Elektrolyse der KOH-Lösung benötigt eine Zellspannung von etwa 1,8 V. Ein zusätzlicher Spannungsabfall an der kationenselektiven Membran ist nicht zu beobachten.

Die Figur 14 ermöglicht den direkten Vergleich der im Labor gemessenen Strom/Spannungskennlinien für eine 1 molale KOH im Anoden- und Kathodenraum (vgl. Figur 13) in Analogie zu der Elektrolyse einer 1 molalen $KHCO_3$-Lösung im Anoden- und einer 0,5 molalen $K_2CO_3$-Lösung im Kathodenraum. Der zusätzliche Spannungsabfall an der kationenselektiven Membran, der zur Freisetzung des $CO_2$ benötigt wird, ist durch den pH-Wertunterschied in der Anodenkammer und Kathodenkammer gegeben, der sich aus dem beladenen und unbeladenen Absorbens ergibt. Je nach Konzentration variiert dieser für $KHCO_3$ zwischen pH = 7,8 - 8 in der Anodenkammer und für $K_2CO_3$ zwischen pH= 11,5 und 13,5. Bei einer Konzentration von 1 mol/kg $KHCO_3$ in der Anodenkammer, pH = 7,9 und 0,5 mol/kg $K_2CO_3$ in der Kathodenkammer, pH = 11,7, ergibt sich unter Anwendung der Nernst'schen Gleichung, ein zusätzlicher Spannungsabfall von theoretisch $\Psi$= 0,22 V. Dies entspricht einem $\Delta G$ = 22 kJ pro mol $CO_2$ Dies entspricht in etwa dem thermodynamischen Minimum. Die elektrolytische Freisetzung des $CO_2$ aus einer $KHCO_3$ Lösung unter Bildung von $K_2CO_3$ stellt somit die energetisch effektivste Form der Freisetzung von absorbiertem $CO_2$ dar. Die Labormessungen bestätigen mit einer Zellspannung von etwas über 2 V die obigen theoretischen Betrachtungen.

Figur 15 zeigt die Strom/Spannungskurve einer 0,5 molalen $K_2SO_4$ Lösung, pH = 7,4 in der Anodenkammer und einer 1 molalen $K_2CO_3$-Lösung, pH = 11,8, in der Kathodenkammer. Der direkte Vergleich der Strom/Spannungskurven mit der zuvor diskutierten Elektrolyse einer $KHCO_3$/$K_2CO_3$-Lösung bestätigt, dass die höhere pH-Wert Differenz zwischen der Anoden- und Kathodenkammer in einer höheren experimentell beobachteten Elektrolysenspannung von etwa 0.2 V resultiert. Die Elektrolyse einer $K_2SO_4$ Lösung entspricht dem in der Figur 7 vorgestellten Verfahren.

In de Figur 16 ist die Strom/Spannungskennlinie der Elektrolyse in einem Dreikammersystem entsprechend der Figur 5 dargestellt. In der Anodenkammer befindet sich eine ein molale KOH Lösung mit einem pH = 14. In der Zwischenkammer als auch in der Kathodenkammer befinden sich die gleiche Lösung entsprecht einer Zusammensetzung von: $KHCO_3$ 5 Gew.-% + $K_2CO_3$ 5 Gew.-% mit einem pH = 9,5. Der Figur kann im Vergleich zur Figur 13 entnommen werden, dass durch die Verwendung der bipolaren Membran eine zusätzliche Elektrolysenspannung von etwa 0,5 V erforderlich ist. Theoretisch ergibt sich ein Membranpotential von 0,27 V. zunehmender $K_2CO_3$-Konzentration. Die $CO_2$-Aufnahmerate sinkt mit zunehmender $K_2CO_3$-Konzentration und bei Zugabe von $KHCO_3$ bis zum Erreichen der Sättigungsgrenze. Die $CO_2$-Massentransferrate ist mit einem Durchschnittswert von 0,08 mol/s $m^2$ bar zur großtechnischen Verwendung einer Packungskolonne ausreichend.

Figur 13 zeigt die Strom/Spannungskennlinie der Elektrolyse einer 1 molalen KOH-Lösung mit Hilfe des in Figur 1 skizzierten Aufbaues. Der Anoden- und Kationenraum sind durch eine kationenselektive Membran getrennt. Die Elektrolyse der KOH-Lösung benötigt eine Zellspannung von etwa 1,8 V. Ein zusätzlicher Spannungsabfall an der kationenselektiven Membran ist nicht zu beobachten.

Die Figur 14 ermöglicht den direkten Vergleich der im Labor gemessenen Strom/Spannungskennlinien für eine 1 molale KOH im Anoden- und Kathodenraum (vgl. Figur 13) in Analogie zu der Elektrolyse einer 1 molalen $KHCO_3$-Lösung im Anoden- und einer 0,5 molalen $K_2CO_3$-Lösung im Kathodenraum. Der zusätzliche Spannungsabfall an der kationenselektiven Membran, der zur Freisetzung des $CO_2$ benötigt wird, ist durch den pH-Wertunterschied in der Anodenkammer und Kathodenkammer gegeben, der sich aus dem beladenen und unbeladenen Absorbens ergibt. Je nach Konzentration variiert dieser für $KHCO_3$ zwischen pH = 7,8 - 8 in der Anodenkammer und für $K_2CO_3$ zwischen pH= 11,5 und 13,5. Bei einer Konzentration von 1 mol/kg $KHCO_3$ in der Anodenkammer, pH = 7,9 und 0,5 mol/kg $K_2CO_3$ in der Kathodenkammer, pH = 11,7, ergibt sich unter Anwendung der Nernst'schen Gleichung, ein zusätzlicher Spannungsabfall von theoretisch $\Psi$= 0,22 V. Dies entspricht einem $\Delta G$ = 22 kJ pro mol $CO_2$ Dies entspricht in etwa dem thermodynamischen Minimum. Die elektrolytische Freisetzung des $CO_2$ aus einer $KHCO_3$ Lösung unter Bildung von $K_2CO_3$ stellt somit die energetisch effektivste Form der Freisetzung von absorbiertem $CO_2$ dar. Die Labormessungen bestätigen mit einer Zellspannung von etwas über 2 V die obigen theoretischen Betrachtungen.

Figur 15 zeigt die Strom/Spannungskurve einer 0,5 molalen $K_2SO_4$ Lösung, pH = 7,4 in der Anodenkammer und einer 1 molalen $K_2CO_3$-Lösung, pH = 11,8, in der Kathodenkammer. Der direkte Vergleich der Strom/Spannungskurven mit der zuvor diskutierten Elektrolyse einer $KHCO_3$/$K_2CO_3$-Lösung bestätigt, dass die höhere pH-Wert Differenz zwischen der Anoden- und Kathodenkammer in einer höheren experimentell beobachteten Elektrolysenspannung von etwa 0.2 V resultiert. Die Elektrolyse einer $K_2SO_4$ Lösung entspricht dem in der Figur 7 vorgestellten Verfahren.

In der Figur 16 ist die Strom/Spannungskennlinie der Elektrolyse in einem Dreikammersystem entsprechend der Figur 5 dargestellt. In der Anodenkammer befindet sich eine ein molale KOH Lösung mit einem pH = 14. In der Zwischenkammer als auch in der Kathodenkammer befinden sich die gleiche Lösung entsprecht einer Zusammensetzung von: $KHCO_3$ 5 Gew.-% + $K_2CO_3$ 5 Gew.-% mit einem pH = 9,5. Der Figur kann im Vergleich zur Figur 13 entnommen werden, dass durch die Verwendung der bipolaren Membran eine zusätzliche Elektrolysenspannung von etwa 0,5 V erforderlich ist. Theoretisch ergibt sich ein Membranpotential von 0,27 V.

**Patentansprüche**

1. Verfahren zur Isolierung von Kohlendioxid aus einem Luftstrom, **dadurch gekennzeichnet, dass** das Verfahren mindestens die Schritte umfasst:

   a) Bereitstellen einer wässrigen Lösung eines Kohlendioxid-Absorptionsmittels, wobei das Kohlendioxid-Absorptionsmittel Kationen aus der 1. Hauptgruppe des Periodensystems umfasst;
   b) Durchleiten eines Kohlendioxid enthaltenden Luftstroms durch die in Verfahrensschritt a) bereitgestellte Lösung, wobei zumindest ein Teil des Kohlendioxids aus dem Luftstrom am Kohlendioxid-Absorptionsmittel gebunden und der Luftstrom an Kohlendioxid abgereichert wird, wobei in einen zweiten Verfahrensteilschritt b') das Kohlendioxid-Absorptionsmittel mit absorbiertem Kohlendioxid ausgefällt und von der Lösung des Verfahrensschrittes b) abgetrennt wird;
   c) Einleiten einer wässrigen Lösung des ausgefallenen Kohlendioxid-Absorptionsmittels mit absorbiertem Kohlendioxid in eine mittlere Kammer einer mindestens Drei-Kammer-Elektrolysezelle aus Anodenkammer, Kathodenkammer und mindestens einer zwischen der Anodenkammer und der Kathodenkammer angeordneten, mittleren Kammer, wobei die an Kohlendioxid-Absorptionsmittel mit absorbiertem Kohlendioxid verarmte Mutterlösung zumindest zum Teil in die Kathodenkammer der Elektrolysezelle geleitet wird, wobei die Drei-Kammer-Elektrolysezelle eine für einwertige Kationen selektive Membran aufweist und Elektrolysieren der wässrigen Lösung unter Freisetzung zumindest eines Teils des Kohlendioxids.

2. Verfahren nach Anspruch 1, wobei die molare Sättigung des Absorptionsmittels mit Kohlendioxid am Anfang des Verfahrensschritts c) größer oder gleich 90 mol-% und kleiner oder gleich 100 mol-% bezogen auf die Konzentration des Absorptionsmittels in der wässrigen Lösung beträgt.

3. Verfahren nach einem der vorhergehenden Ansprüche, wobei das Kohlendioxid-Absorptionsmittel ausgesucht ist aus der Gruppe der Alkali-Carbonate, Alkali-Salze der Aminosäuren oder Mischungen mindestens zweier Komponenten aus dieser Gruppe.

4. Verfahren nach einem der vorhergehenden Ansprüche, wobei das Kohlendioxid-Absorptionsmittel nach der $CO_2$-Aufnahme Hydrogencarbonat umfasst.

5. Verfahren nach Anspruch 4, wobei das Kohlendioxid-Absorptionsmittel im Verfahrensschritt a) Kaliumcarbonat mit einer Konzentration von größer oder gleich 200 g/L und kleiner oder gleich 1200 g/L umfasst.

6. Verfahren nach einem der vorhergehenden Ansprüche, wobei die Konzentration an Kohlendioxid-Absorptionsmittel mit absorbiertem Kohlendioxid beim Einspeisen in die Elektrolyse größer oder gleich 2 mol/L und kleiner oder gleich 8 mol/L beträgt.

7. Verfahren nach einem der vorhergehenden Ansprüche, wobei die Leitfähigkeit des Eingangsstroms in einen mittleren Teil der Elektrolyse im Verfahrensschritt c) größer oder gleich 0,1 S/cm und kleiner oder gleich 0,5 S/cm beträgt.

8. Verfahren nach einem der vorhergehenden Ansprüche, wobei in der Anodenkammer der mindestens 3-Kammerelektrolyse wässrige KOH-Lösung als Elektrolyt verwendet wird.

9. Verfahren nach Anspruch 8, wobei die Leitfähigkeit der in der Anodenkammer vorliegenden wässrigen KOH-Lösung unter Betriebsbedingungen größer oder gleich 0,5 S/cm und kleiner oder gleich 1,3 S/cm beträgt.

10. Verfahren nach einem der vorhergehenden Ansprüche, wobei die Leitfähigkeit der zu Beginn der Elektrolyse in der Kathodenkammer vorliegenden Elektrolytlösung unter Betriebsbedingungen größer oder gleich 0,4 S/cm und kleiner oder gleich 1,15 S/cm beträgt.

11. Verfahren nach einem der Ansprüche 4-10, wobei nach dem Verfahrensschritt b) Hydrogencarbonat vom Absorptionsmittel abgetrennt und unter mindestens Zusatz von Wasser als wässrige Lösung in die mindestens 3-Kammer-Elektrolyse gegeben wird.

12. Verfahren nach einem der vorhergehenden Ansprüche, wobei die Lösung des Kohlendioxid-Absorptionsmittels im Verfahrensschritt a) eine Verbindung mit einer Aminfunktion als Kohlendioxid-Absorptionsbeschleuniger umfasst, wobei die Verbindung mit einer Aminfunktion bei 20°C und in einer Konzentration von 1 mol/kg eine Carbamat-Gleichgewichtskonstante, ermittelt aus Kohlendioxid-Partialdruckmessungen, von größer oder gleich 0,01 und kleiner oder gleich 0,75 aufweist.

**13.** Verwendung eines Verfahrens nach einem der vorhergehenden Ansprüche zur Absorption von Kohlendioxid aus einem Luftstrom, wobei der Luftstrom eine Kohlendioxidkonzentration von größer oder gleich 100 ppm und kleiner oder gleich 650 ppm aufweist.

## Claims

**1.** A method for isolating carbon dioxide from an air stream, **characterized in that** the method comprises at least the steps of

a) providing an aqueous solution of a carbon dioxide absorbent, the carbon dioxide absorbent comprising cations from the 1st main group of the periodic table;
b) passing an air stream containing carbon dioxide through the solution provided in method step a), wherein at least some of the carbon dioxide from the air stream is bound to the carbon dioxide absorbent and the air stream is depleted in carbon dioxide, wherein in a second method substep b') the carbon dioxide absorbent with absorbed carbon dioxide is precipitated and separated from the solution of method step b);
c) feeding an aqueous solution of the precipitated carbon dioxide absorbent with absorbed carbon dioxide into a middle chamber of an at least three-chamber electrolysis cell of an anode chamber, a cathode chamber, and at least one middle chamber arranged between the anode chamber and the cathode chamber, wherein the mother solution depleted in carbon dioxide absorbent with absorbed carbon dioxide is at least in part fed into the cathode chamber of the electrolysis cell, wherein the three-chamber electrolysis cell comprises a membrane selective for monovalent cations and electrolyzing the aqueous solution to release at least a portion of the carbon dioxide .

**2.** The method according to claim 1, wherein the molar saturation of the absorbent with carbon dioxide at the beginning of method step c) is greater than or equal to 90 mol% and less than or equal to 100 mol% based on the concentration of the absorbent in the aqueous solution.

**3.** The method according to any one of the preceding claims, wherein the carbon dioxide absorbent is selected from the group of alkali metal carbonates, alkali metal salts of amino acids or mixtures of at least two components from this group.

**4.** The method according to any one of the preceding claims, wherein the carbon dioxide absorbent comprises hydrogen carbonate after $CO_2$ uptake.

**5.** The method according to claim 4, wherein the carbon dioxide absorbent in method step a) comprises potassium carbonate having a concentration of greater than or equal to 200 g/L and less than or equal to 1200 g/L.

**6.** The method according to any one of the preceding claims, wherein the concentration of carbon dioxide absorbent with absorbed carbon dioxide when fed into the electrolysis is greater than or equal to 2 mol/L and less than or equal to 8 mol/L.

**7.** The method according to any one of the preceding claims, wherein the conductivity of the input current to a middle part of the electrolysis in method step c) is greater than or equal to 0.1 S/cm and less than or equal to 0.5 S/cm.

**8.** The method according to any one of the preceding claims, wherein aqueous KOH solution is used as electrolyte in the anode chamber of the at least 3-chamber electrolysis.

**9.** The method according to claim 8, wherein the conductivity of the aqueous KOH solution present in the anode chamber is greater than or equal to 0.5 S/cm and less than or equal to 1.3 S/cm under operating conditions.

**10.** The method according to any one of the preceding claims, wherein the conductivity of the electrolyte solution present in the cathode chamber at the beginning of the electrolysis is greater than or equal to 0.4 S/cm and less than or equal to 1.15 S/cm under operating conditions.

**11.** The method according to any one of claims 4-10, wherein, after method step b), hydrogen carbonate is separated from

the absorbent and added to the at least three-chamber electrolysis as an aqueous solution with at least the addition of water.

**12.** The method according to any one of the preceding claims, wherein the solution of the carbon dioxide absorbent in method step a) comprises a compound having an amine function as carbon dioxide absorption accelerator, wherein the compound having an amine function at 20°C and at a concentration of 1 mol/kg comprises a carbamate equilibrium constant, determined from carbon dioxide partial pressure measurements, of greater than or equal to 0.01 and less than or equal to 0.75.

**13.** Use of a method according to any one of the preceding claims for absorbing carbon dioxide from an air stream, wherein the air stream has a carbon dioxide concentration of greater than or equal to 100 ppm and less than or equal to 650 ppm.

## Revendications

**1.** Procédé pour isoler le dioxyde de carbone d'un courant d'air, **caractérisé en ce que** le procédé comprend au moins les étapes suivantes :

a) fournir une solution aqueuse d'un absorbant de dioxyde de carbone, dans laquelle l'absorbant de dioxyde de carbone comprenant des cations du premier groupe principal du tableau périodique;
b) passer un courant d'air contenant du dioxyde de carbone à travers la fournie à l'étape de procédé a), dans lequel au moins une partie du dioxyde de carbone du courant d'air est liée à l'absorbant de dioxyde de carbone et le courant d'air est appauvri en dioxyde de carbone, dans lequel, dans une deuxième étape partielle de procédé b') l'absorbant de dioxyde de carbone avec le dioxyde de carbone absorbé est précipité et séparé de la solution de l'étape de procédé b);
c) introduire une solution aqueuse de l'absorbant de dioxyde de carbone précipité avec du dioxyde de carbone absorbé dans un compartiment central d'une cellule électrolytique à au moins trois compartiments d'un compartiment anodique, d'un compartiment cathodique et au moins d'un compartiment central disposé entre le compartiment anodique et le compartiment cathodique, dans lequel la solution mère appauvrie en absorbant de dioxyde de carbone avec le dioxyde de carbone absorbé est au moins en partie introduite dans la chambre cathodique de la cellule d'électrolyse, dans lequel la cellule d'électrolyse à trois compartiments comprend une membrane sélective pour les cations monovalents et électrolyse de la solution aqueuse avec libération d'au moins une partie du dioxyde de carbone.

**2.** Procédé selon la revendication 1, dans lequel la saturation molaire de l'absorbant en dioxyde de carbone au début de l'étape de procédé c) est supérieure ou égale à 90 % en moles et inférieure ou égale à 100 % en moles par rapport à la concentration de l'absorbant dans la solution aqueuse.

**3.** Procédé selon l'une des revendications précédentes, dans lequel l'absorbant de dioxyde de carbone est choisi dans le groupe des carbonates alcalins, des sels alcalins d'aminoacides ou des mélanges d'au moins deux composants de ce groupe.

**4.** Procédé selon l'une des revendications précédentes, dans lequel l'absorbant de dioxyde de carbone comprend de l'hydrogénocarbonate après l'absorption de $CO_2$.

**5.** Procédé selon la revendication 4, dans lequel l'absorbant du dioxyde de carbone dans l'étape de procédé a) comprend du carbonate de potassium ayant une concentration supérieure ou égale à 200 g/L et inférieure ou égale à 1200 g/L.

**6.** Procédé selon l'une des revendications précédentes, dans lequel la concentration en absorbant de dioxyde de carbone avec le dioxyde de carbone absorbé lors de l'introduction dans l'électrolyse est supérieure ou égale à 2 mol/L et inférieure ou égale à 8 mol/L.

**7.** Procédé selon l'une des revendications précédentes, dans lequel la conductivité du courant d'entrée dans une partie centrale de l'électrolyse à l'étape de procédé c) est supérieure ou égale à 0,1 S/cm et inférieure ou égale à 0,5 S/cm.

**8.** Procédé selon l'une des revendications précédentes, dans lequel une solution aqueuse de KOH est utilisée comme

électrolyte dans le compartiment anodique de l'électrolyse à au moins trois compartiments.

**9.** Procédé selon la revendication 8, dans lequel la conductivité de la solution aqueuse de KOH présente dans le compartiment anodique est supérieure ou égale à 0,5 S/cm et inférieure ou égale à 1,3 S/cm dans les conditions d'utilisation.

**10.** Procédé selon l'une des revendications précédentes, dans lequel la conductivité de la solution d'électrolyte présente dans le compartiment cathodique au début de l'électrolyse est supérieure ou égale à 0,4 S/cm et inférieure ou égale à 1,15 S/cm dans les conditions d'utilisation.

**11.** Procédé selon l'une des revendications 4 à 10, dans lequel, après l'étape de procédé b), hydrogénocarbonate est séparé de l'absorbant et est introduit sous forme de solution aqueuse dans l'électrolyse à au moins trois compartiments, avec au moins une addition d'eau.

**12.** Procédé selon l'une des revendications précédentes, dans lequel la solution d'absorbant du dioxyde de carbone à l'étape de procédé a) comprend un composé à fonction aminé comme accélérateur d'absorption du dioxyde de carbone, dans lequel le composé à fonction aminé comprend une constante d'équilibre en carbamate, déterminée à partir de mesures de pression partielle de dioxyde de carbone, supérieure ou égale à 0,01 et inférieure ou égale à 0,75 à 20°C et à une concentration de 1 mol/kg.

**13.** Utilisation d'un procédé selon l'une des revendications précédentes pour l'absorption de dioxyde de carbone à partir d'un courant d'air, dans lequel le courant d'air comprend une concentration en dioxyde de carbone supérieure ou égale à 100 ppm et inférieure ou égale à 650 ppm.

## Figur 1

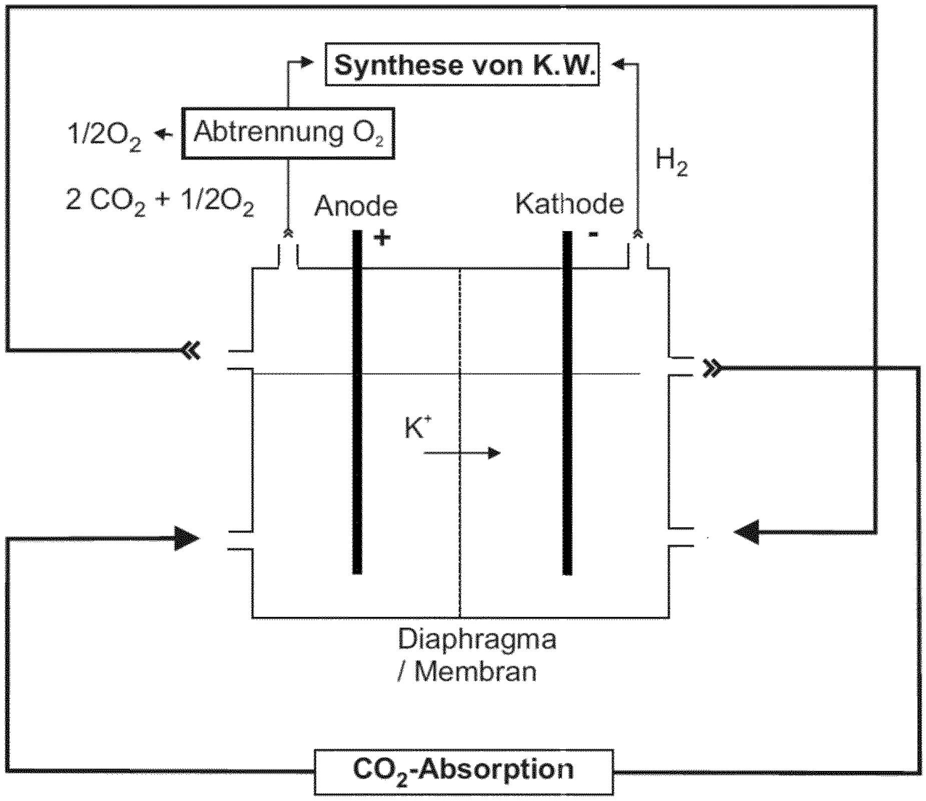


## Figur 2

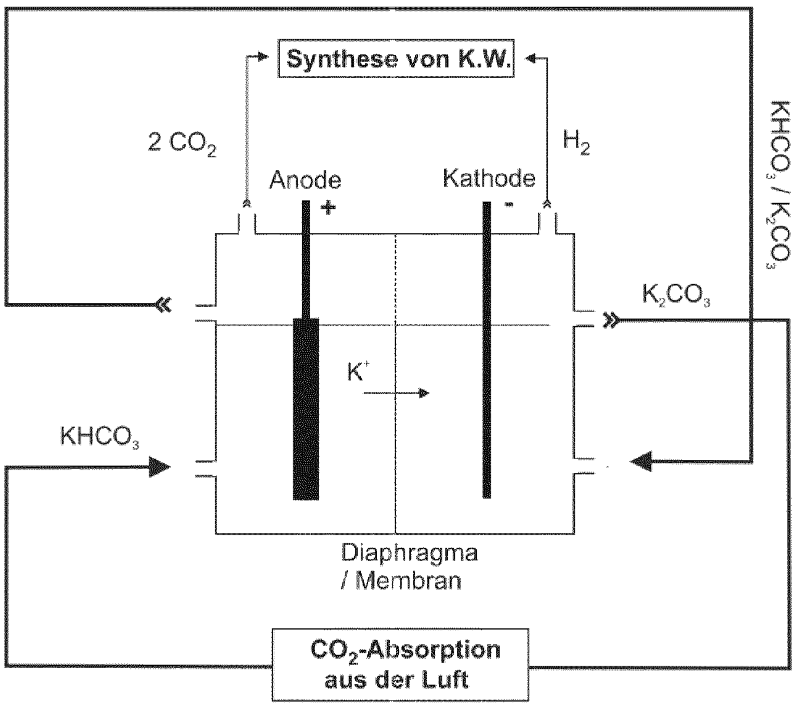

# Figur 3

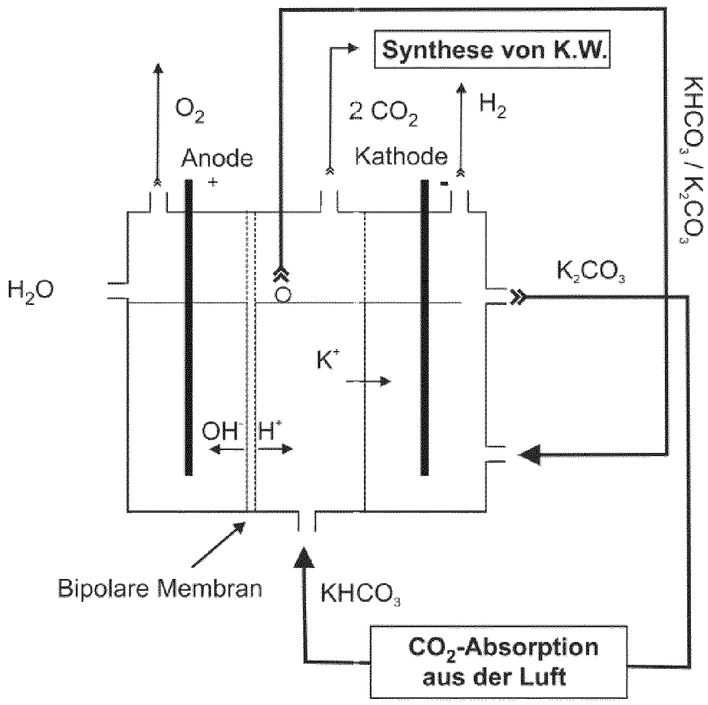


# Figur 4

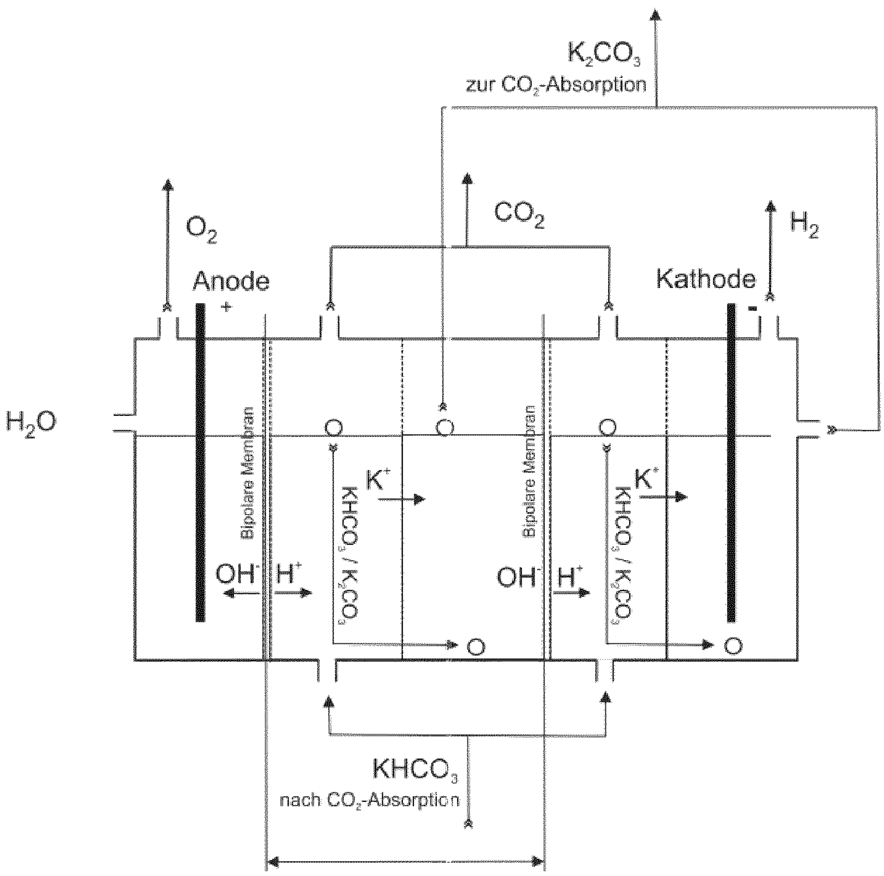

## Figur 5

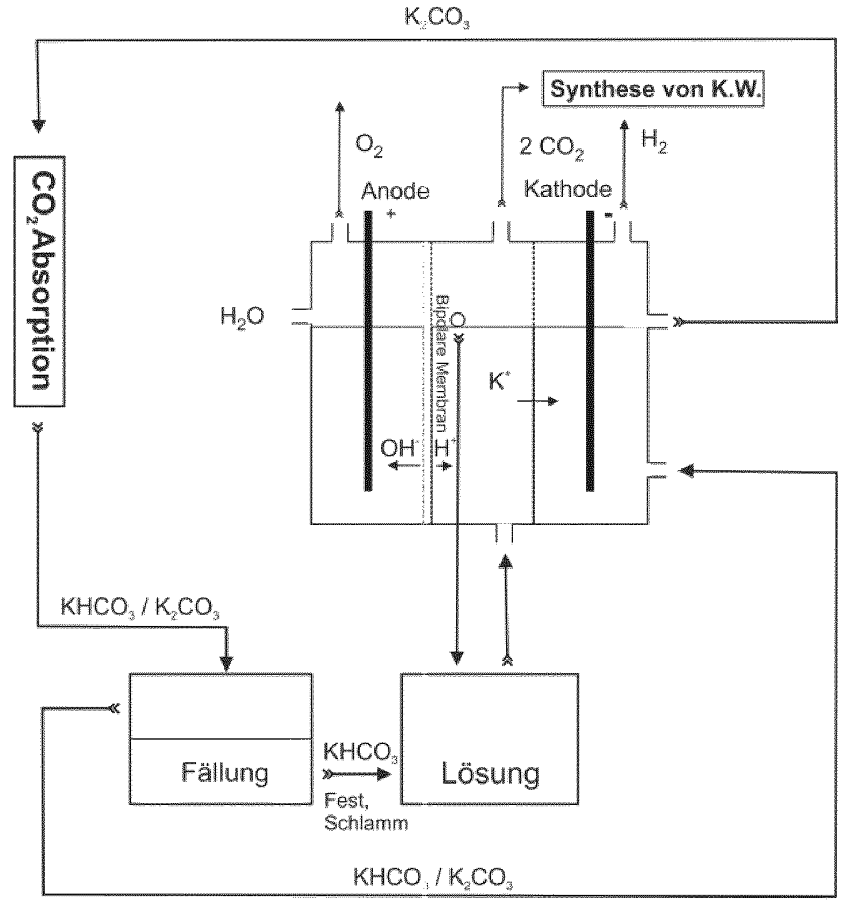


## Figur 6

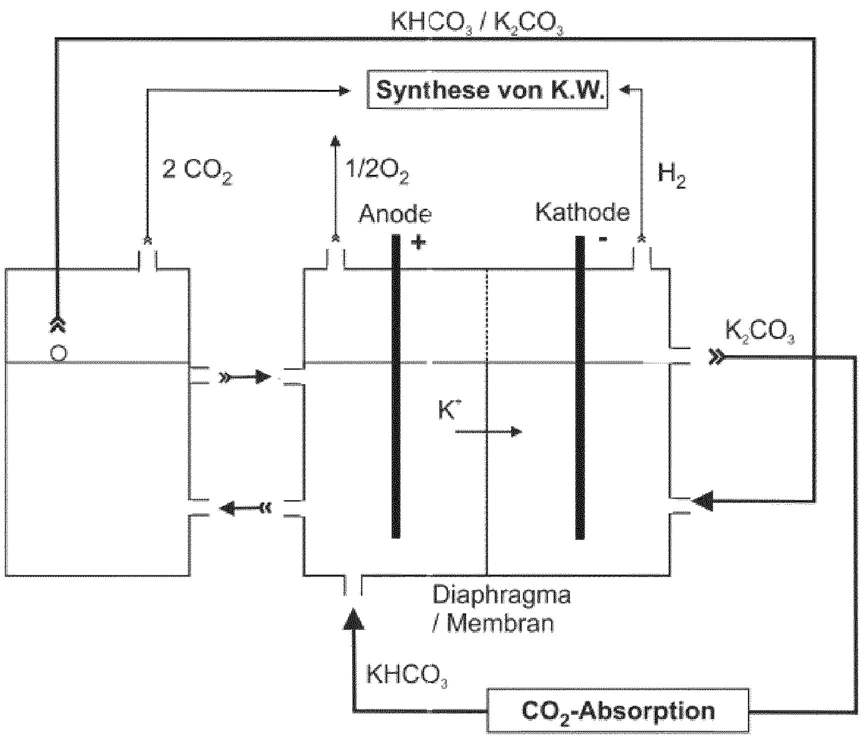

## Figur 7

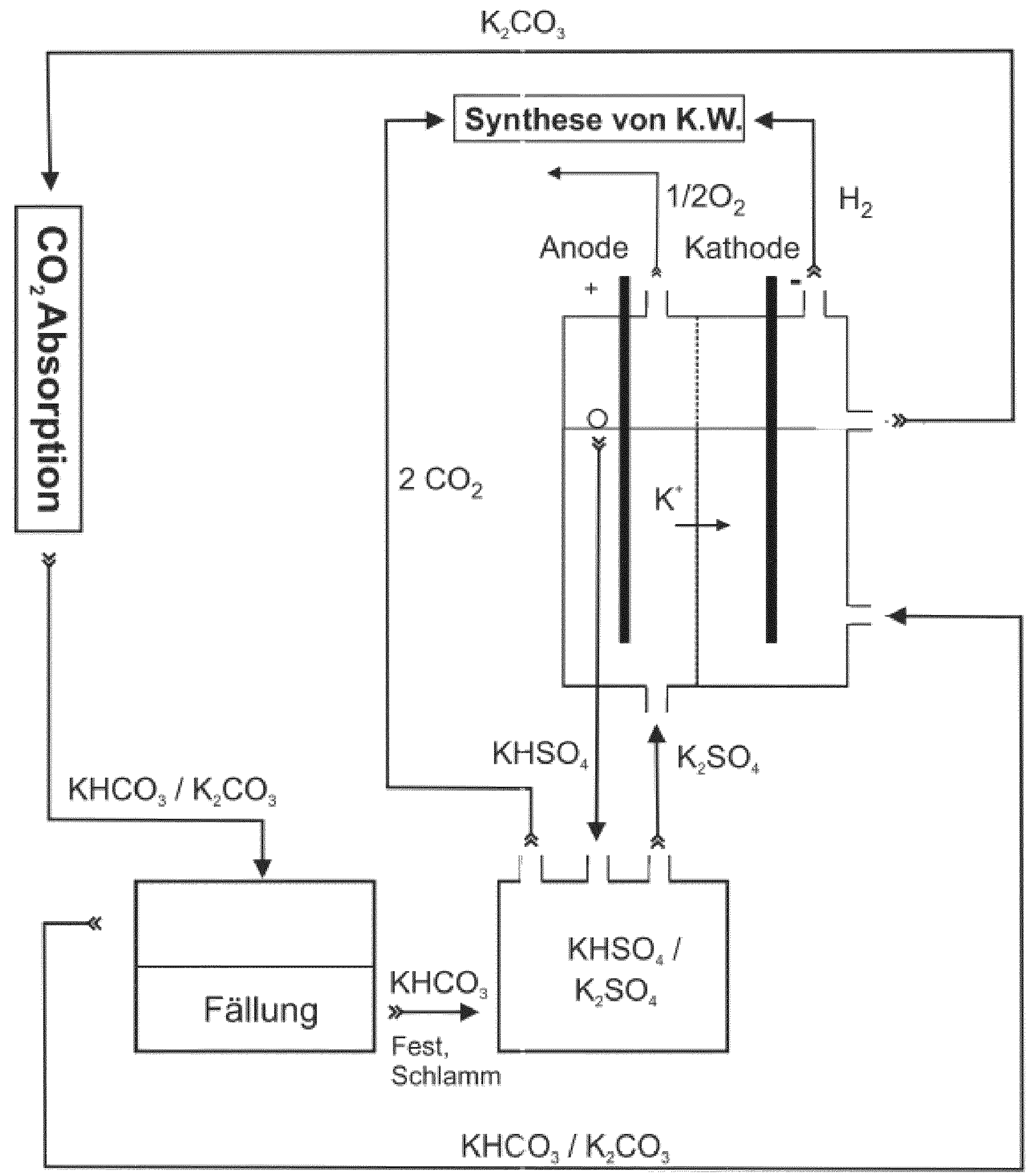
K₂CO₃
Synthese von K.W.
1/2O₂
H₂
Anode
Kathode
+
-
O
2 CO₂
K⁺
CO₂ Absorption
KHSO₄
K₂SO₄
KHCO₃ / K₂CO₃
Fällung
KHCO₃
Fest,
Schlamm
KHSO₄ /
K₂SO₄
KHCO₃ / K₂CO₃

Figur 8

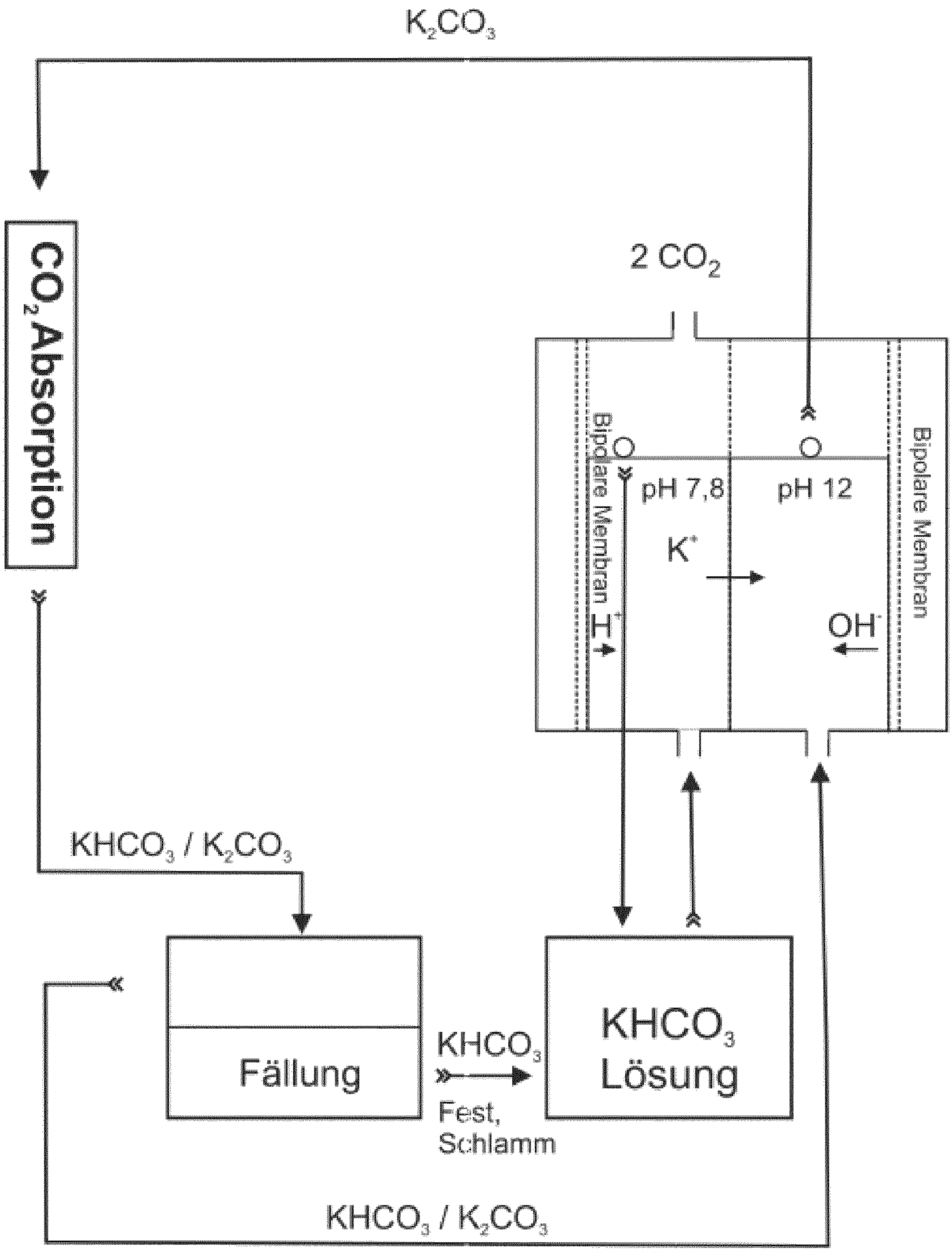

$K_2CO_3$
$CO_2$ Absorption
2 $CO_2$
Bipolare Membran
pH 7,8
pH 12
$K^+$
$H^+$
$OH^-$
Bipolare Membran
$KHCO_3$ / $K_2CO_3$
Fällung
$KHCO_3$
Fest,
Schlamm
$KHCO_3$
Lösung
$KHCO_3$ / $K_2CO_3$

Figur 9

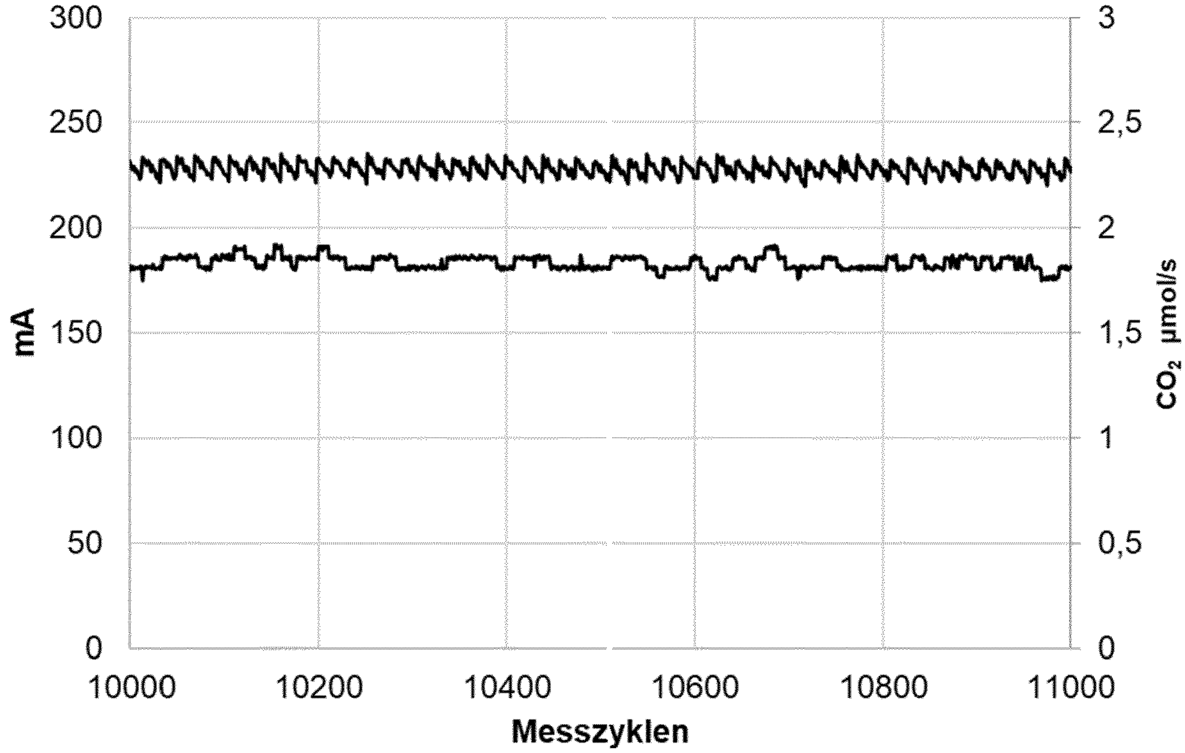


Figur 10

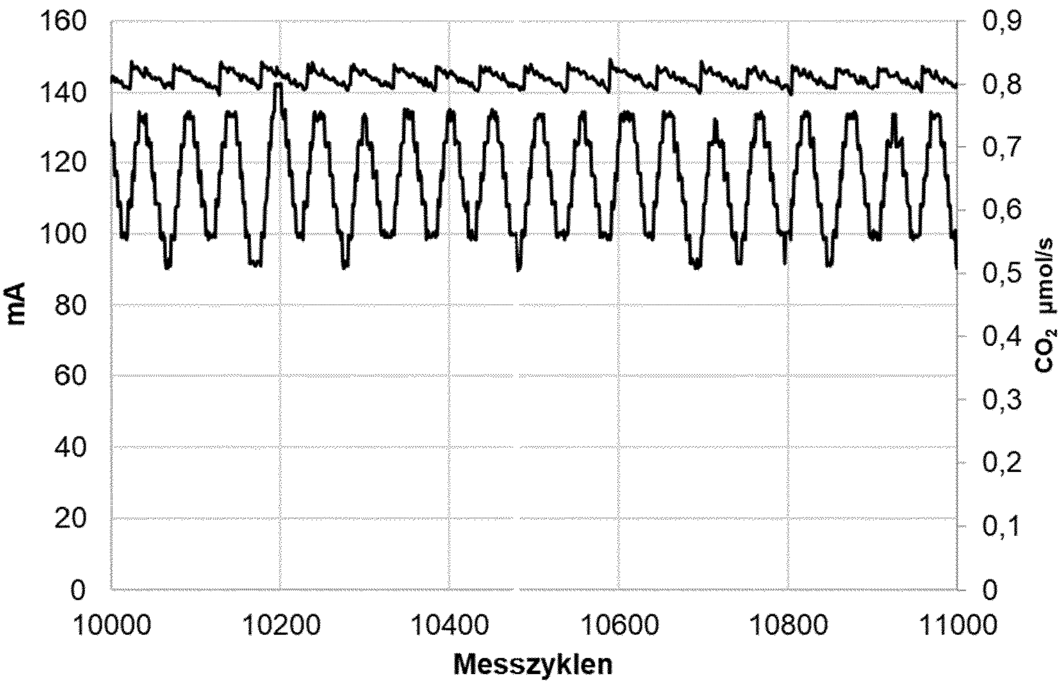

# Figur 11

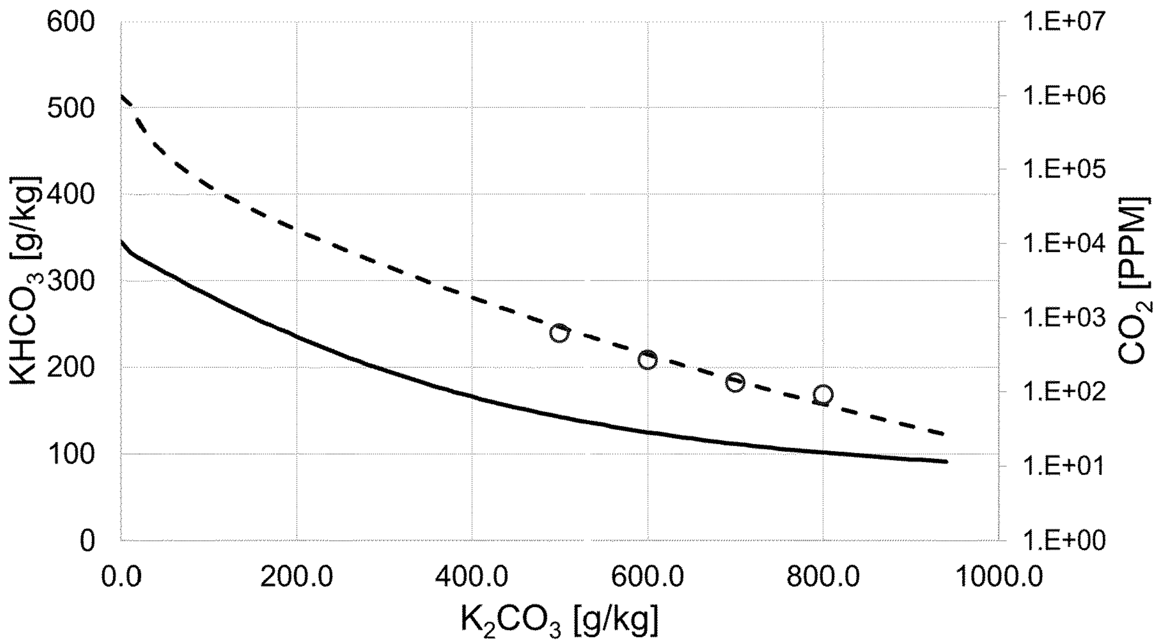


# Figur 12

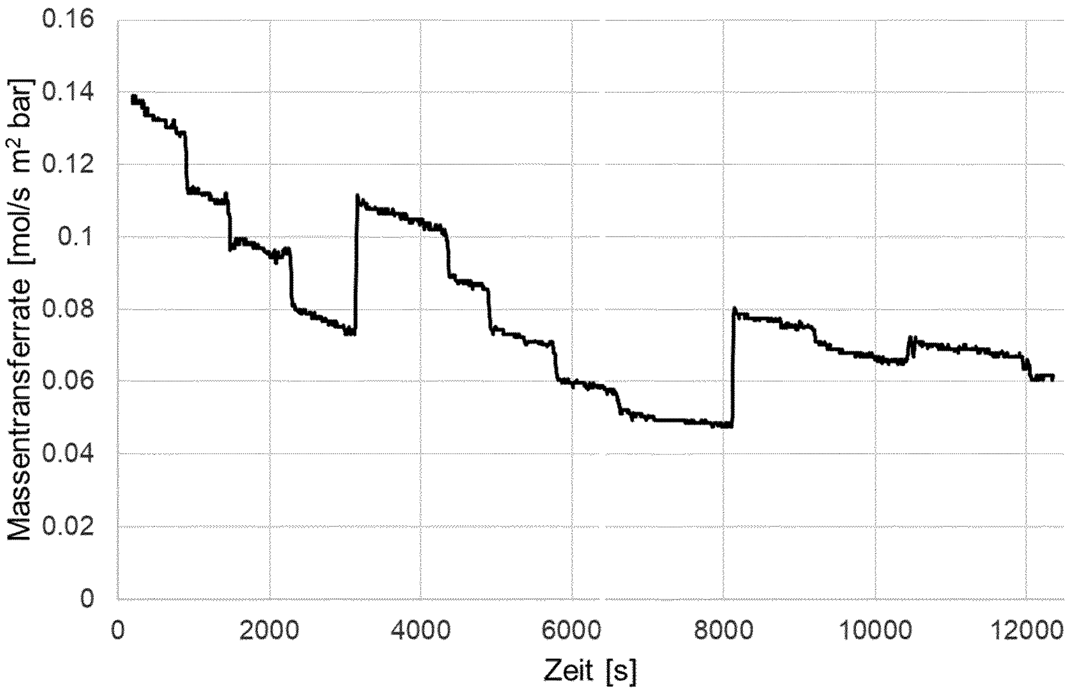

## Figur 13

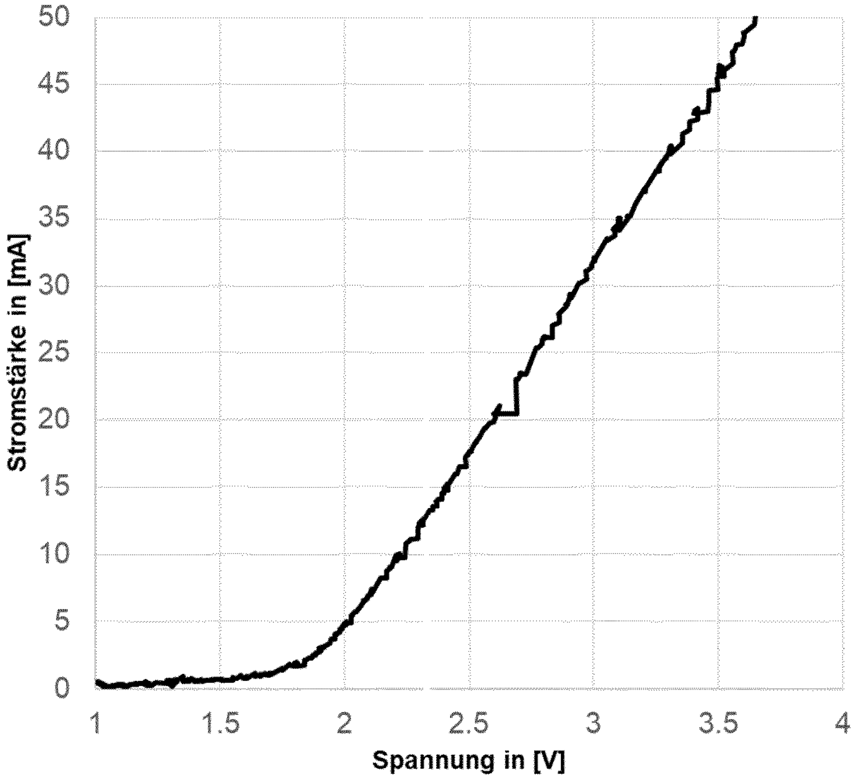


## Figur 14

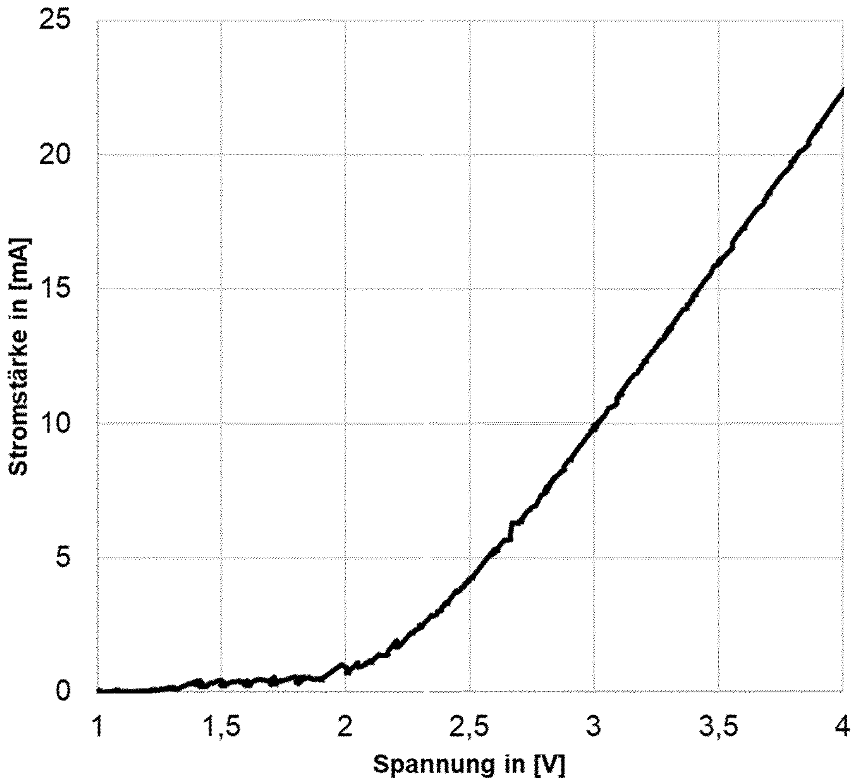

Figur 15

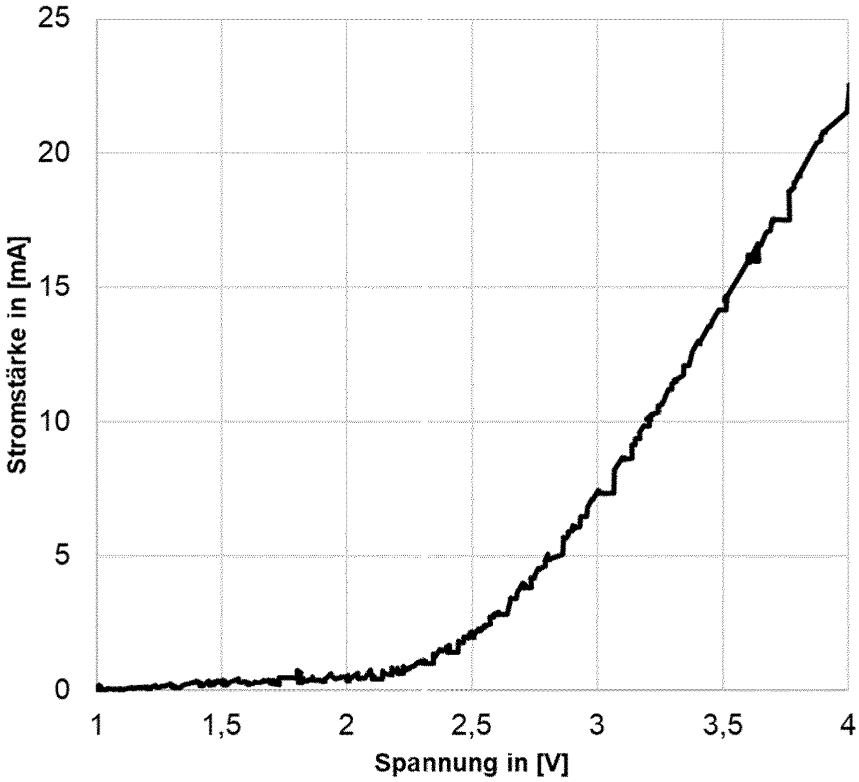


Figur 16

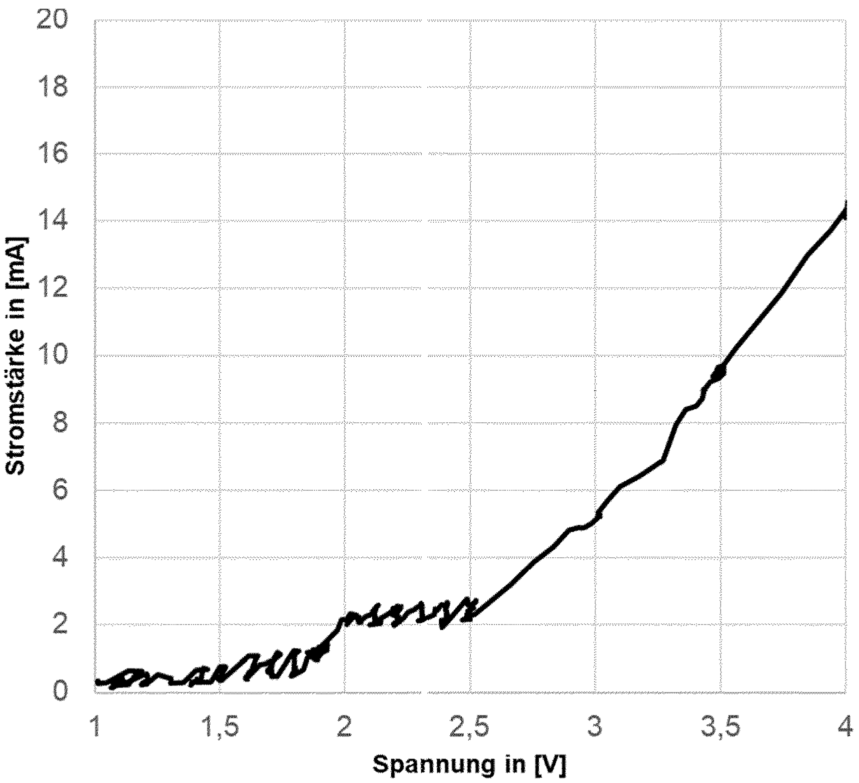

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2019085472 A1
- US 4197421 A
- US 2007045125 A1
- WO 2022023387 A1
- US 2011277474 A1
- WO 2020163513 A1
- US 2017209826 A1
- EP 2163294 B1
- EP 2737937 A1
- WO 2008072979 A1
- WO 2020152330 A1
- EP 3384973 A1


### In der Beschreibung aufgeführte Nicht-Patentliteratur


- **DRUCKSCHRIFT LIZUKA et al.** Carbon dioxide recovery from carbonate solutions using bipolar membrane electrodialysis. *Separation and Purification Technology*, 2012, vol. 101, 49-59